# EUROPEAN PATENT APPLICATION

(11) **EP 3 950 510 A1**
(43) Date of publication of application: **09.02.2022**
(21) Application number: 19922340.5
(22) Date of filing: 31.12.2019
(51) Int. Cl.: B64D 47/08, B64C 39/02

(54) **INTELLIGENT DEVICE AND SWITCHING METHOD THEREFOR**

(30) Priority: 01.04.2019 CN 201910257812; 10.05.2019 CN 201910390340; 09.09.2019 CN 201910849426; 09.09.2019 CN 201910850139
(71) Applicant: Powervision Tech (Suzhou) Ltd., Changshu City Suzhou, Jiangsu 215500 (CN)
(72) Inventor: LIU, Yulong, Suzhou, Jiangsu 215500 (CN); JIA, Junjie, Suzhou, Jiangsu 215500 (CN); CUI, Shaohua, Suzhou, Jiangsu 215500 (CN); YANG, Yanqing, Suzhou, Jiangsu 215500 (CN); PAN, Xingqiang, Suzhou, Jiangsu 215500 (CN); CHEN, Longfei, Suzhou, Jiangsu 215500 (CN); LU, Weilong, Suzhou, Jiangsu 215500 (CN); ZHANG, Baoyi, Suzhou, Jiangsu 215500 (CN); WU, Teng, Suzhou, Jiangsu 215500 (CN); BAI, Tong, Suzhou, Jiangsu 215500 (CN)
(74) Representative: Straus, Alexander
(86) International application number: PCT/CN2019/130771
(87) International publication number: WO 2020/199691

(57) **Abstract**

The present disclosure proposes an intelligent device that comprises a body comprising a controller and a first interface; the controller is in connection with the first interface; the body of the intelligent device is connected with an external device via the first interface; different external devices are connected with the body of the intelligent device to form various intelligent devices so as to meet the use requirements in different scenes.

## Description

### CROSS-REFERENCE TO RELATED APPLICATIONS

The present application claims priority to Chinese patent application filed on April 1, 2019 with the Chinese Patent Office under the Appl. No. 201910257812.7 and the application title "Intelligent Device", Chinese patent application filed on May 10, 2019 with the Chinese Patent Office under the Appl. No. 201910390340.2 and the application title "Foldable Unmanned Aerial Vehicle Structure and Unmanned Aerial Vehicle", Chinese patent application filed on September 9, 2019 with the Chinese Patent Office under the Appl. No. 201910849426.7 and the application title "Intelligent Equipment", and Chinese patent application filed on September 9, 2019 with the Chinese Patent Office under the Appl. No. 201910850139.8 and the application title "Switching Method and Device, Unmanned Aerial Vehicle and Readable Storage Medium", all of which are hereby incorporated by reference in their entirety.

### TECHNICAL FIELD

The present disclosure relates to an intelligent device and switching method thereof, falling into the technical field of intelligent devices.

### BACKGROUND OF THE DISCLOSURE

At present, an unmanned aerial vehicle (UAV), an unmanned ship and other intelligent devices all belong to single-domain technologies, but may not be applied across domains. If one desires a UAV to navigate on the water, extra refitting or addition of some necessary external device is needed, and the refitted product further needs to be debugged before it may be used normally. Amphibious conversion also involves such challenging problems as watertightness and dust resistance, which may not be completed by non-professionals, thereby seriously limiting the multi-domain application and popularization of intelligent devices.

### SUMMARY OF THE DISCLOSURE

In accordance with one aspect of the present disclosure, provided is an intelligent device comprising a body comprising: a first interface connected with an external device; and a controller connected with the first interface; wherein device modes of the intelligent device include a handheld device mode and a self-propelled device mode according to the first interface and the external device; and when the intelligent device is in the self-propelled device mode, the controller is configured to control the external device.

In accordance with another aspect of the present disclosure, provided is an intelligent device comprising: a body comprising a first structural connection port and a master connection contact, the first master connection contact being arranged on the first structural connection port; and an external device comprising a slave connection contact; wherein the body is connected with and/or quickly released from the external device via the first structural connection port; and when the body is in connection with the external device, the master connection contact is electrically connected with the slave connection contact.

In accordance with one further aspect of the present disclosure, provided is an intelligent device comprising a body, a UAV arm and a bracket, the body comprising a first interface for alternatively connecting the UAV arm or the bracket.

In accordance with one more aspect of the present disclosure, provided is a switching method applied to an intelligent device, the switching method comprising: determining whether the intelligent device satisfies a state switching condition; and switching the intelligent device from a first state to a second state when the state switching condition is satisfied.

### BRIEF DESCRIPTION OF THE DRAWINGS

FIG. 1 is a diagram illustrating a body of an intelligent device according to the present disclosure;
FIG. 2 is a diagram illustrating a first type of connection among the internal components of the body of the intelligent device according to the present disclosure;
FIG. 3 is a diagram illustrating a second type of connection among the internal components of the body of the intelligent device according to the present disclosure;
FIG. 4 is a diagram illustrating the first interface of a first type according to one embodiment of the present disclosure;
FIG. 5 is a diagram illustrating the first interface of a second type according to one embodiment of the present disclosure;
FIG. 6 is a diagram illustrating the first interface of a third type according to one embodiment of the present disclosure;
FIG. 7 is a diagram illustrating the first interface of a fourth type according to one embodiment of the present disclosure;
FIG. 8 is a diagram illustrating the first interface of a fifth type according to one embodiment of the present disclosure;
FIG. 9 is a diagram illustrating a communication interface according to one embodiment of the present disclosure;
FIG. 10 is a diagram illustrating the external device of a first type according to one embodiment of the present disclosure;
FIG. 11 is a diagram illustrating the external device of a second type according to one embodiment of the present disclosure;
FIG. 12 is a diagram illustrating the external device of a third type according to one embodiment of the present disclosure;
FIG. 13 is a diagram illustrating the external device of a fourth type according to one embodiment of the present disclosure;
FIG. 14 is a diagram illustrating the external device of a fifth type according to one embodiment of the present disclosure;
FIG. 15 is a diagram illustrating a first switching between the external devices of the intelligent device according to one embodiment of the present disclosure;
FIG. 16 is a diagram illustrating a second switching between the external devices of the intelligent device according to one embodiment of the present disclosure;
FIG. 17 is a diagram illustrating a third switching between the external devices of the intelligent device according to one embodiment of the present disclosure;
FIG. 18 is a diagram illustrating the intelligent device of a first type according to one embodiment of the present disclosure;
FIG. 19 is a diagram illustrating the intelligent device of a second type according to one embodiment of the present disclosure;
FIG. 20 is an assembly diagram of an intelligent device according to one embodiment of the present disclosure in the mode of a UAV product;
FIG. 21 is an exploded view of the components of the intelligent device according to one embodiment of the present disclosure in the mode of a UAV product;
FIG. 22 is an assembly diagram of an intelligent device according to one embodiment of the present disclosure in the mode of a handheld DV product;
FIG. 23 is an exploded view of the components of the intelligent device according to one embodiment of the present disclosure in the mode of a handheld DV product;
FIG. 24 shows a perspective view of an UAV arm according to one embodiment of the present disclosure;
FIG. 25 shows a plan view of the UAV arm according to one embodiment of the present disclosure;
FIG. 26 shows a schematic diagram of the connection between the UAV arm and the UAV fuselage according to one embodiment of the present disclosure;
FIGS. 27 and 28 are exploded views of the UAV arm according to one embodiment of the present disclosure;
FIG. 29 shows a perspective view of the bottom side of the UAV arm according to one embodiment of the present disclosure;
FIG. 30 shows a partial enlargement view of the UAV arm according to one embodiment of the present disclosure, in which the upper cover is removed in order to clearly display a reinforcing structure therein;
FIG. 31 is an exploded view of the UAV arm according to one embodiment of the present disclosure, in which a leg of the arm is shown;
FIG. 32 shows a perspective view of the UAV arm;
FIG. 33 shows an exploded view of the UAV arm;
FIG. 34 shows an exploded view of the UAV arm at another angle;
FIG. 35 shows an enlarged view of the circle area A in FIG. 34;
FIG. 36 shows a perspective view of a retractable component;
FIG. 37 shows an exploded view of the UAV arm according to one embodiment of the present disclosure, in which a motor is shown;
FIG. 38 shows a perspective view of a propeller clamp according to one embodiment of the present disclosure;
FIG. 39 is a schematic diagram of the connection between the propeller clamp and the propellers according to one embodiment of the present disclosure;
FIG. 40 is a structural schematic diagram of the internal components of the body of the intelligent device according to one embodiment of the present disclosure;
FIG. 41 is a flowchart of a switching method according to one embodiment of the present disclosure;
FIG. 42 is a schematic diagram of the communication mode between an intelligent device and a ground control terminal according to one embodiment of the present disclosure;
FIG. 43 is a schematic diagram of another communication mode between an intelligent device and a ground control terminal according to one embodiment of the present disclosure;
FIG. 44 is a structural block diagram of a switching device according to one embodiment of the present disclosure.

### DETAILED DESCRIPTION OF THE EMBODIMENTS OF THE DISCLOSURE

Some embodiments of the present disclosure will be described below in detail referring to the accompanying drawings. Without conflict, the following examples and features therein may be combined or replaced with each other.

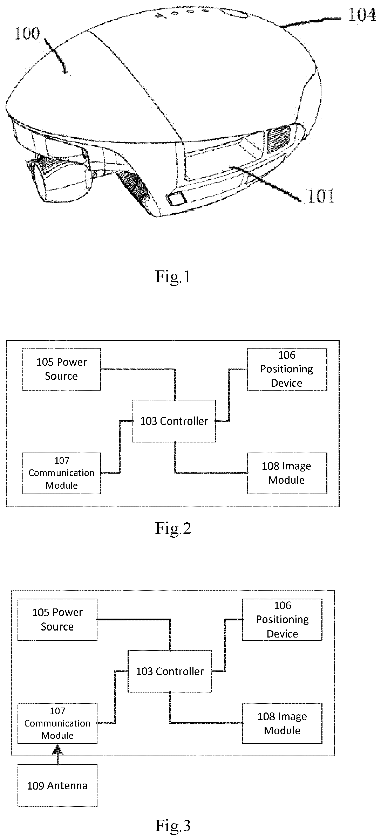

FIG. 1 is a diagram illustrating a body of an intelligent device according to the present disclosure. The body of the intelligent device comprises a controller 103 (not shown in FIG. 1) and a first interface 101. The controller 103 is in connection with the first interface 101. And the body 104 is connected with an external device via the first interface 101.

In one embodiment of the present disclosure, the controller 103 may process data and send a control instruction, control the operation of a component on the body 104 according to the control instruction as is sent, and send an instruction to the external device via the first interface 101 to control the operation of the external device.

FIGS. 2-3 are diagrams illustrating connection among the internal components of the body 104 of the intelligent device of the present disclosure. The body of the intelligent device further comprises a power source 105, a positioning device 106, a communication module 107, an image module 108 and a housing 100. The controller 103 is connected with the power source 105, the positioning device 106, the communication module 107 and the image module 108 and is arranged in the housing 100 of the body 104 of the intelligent device of the intelligent device. The power source 105 supplies power to respective components of the body 104. Further, the power source 105 may also supply power to an external device via the first interface 101.

The positioning device 106 for determining position information about the intelligent device at least includes one or more of a vision sensor, a satellite positioning device, a TOF, a barometer and an ultrasonic sensor.

The communication module 107 for communication connection between the intelligent device and the outside is connected with the controller 103. The communication module 107 comprises an antenna 109. In one embodiment, the antenna 109 is arranged on the body 104 of the intelligent device. While in another embodiment, the antenna 109 is arranged on the external device 102, and the communication module 107 on the body 104 of the intelligent device is connected with the antenna 109 on the external device via the first interface 101.

The image module 108 for acquiring an image or video is connected with the controller 103 or with the communication module 107. The image module 108 is used to acquire the control instruction sent by the controller 103 or the control instruction received by the communication module 107, and the image module 108 is a camera 110. In one embodiment, the camera 110 is arranged on the body of the intelligent device via a gimbal, and the gimbal drives the camera 110 to rotate relative to the body to acquire images and videos from different directions or angles. While in another embodiment, the camera 110 is directly arranged on the body of the intelligent device to acquire images and videos from different directions or angles with the movement of the body of the intelligent device.

In one embodiment of the present disclosure, the first interface 101 is arranged on the body of the intelligent device, corresponding to a second interface of the external device, and connection between the body and the external device is established via the first interface and the second interface.

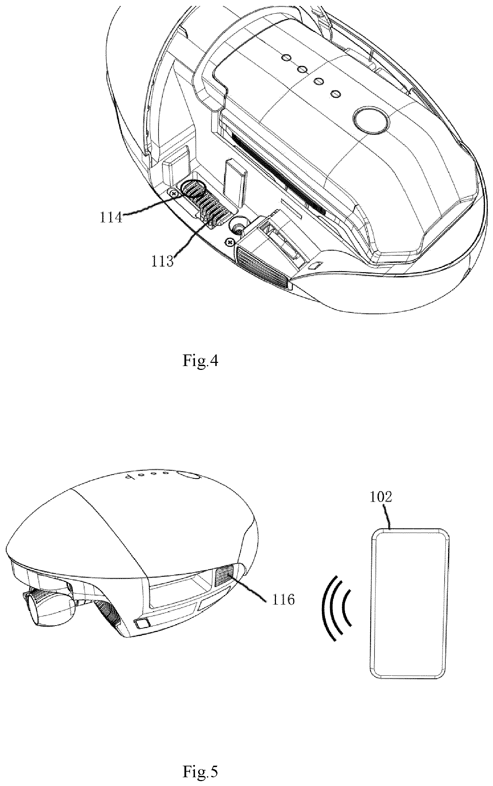

FIG. 4 is a diagram illustrating the first interface of a first type according to one embodiment of the present disclosure, in which the first interface is a wired interface 113, and the body of the intelligent device is connected with the external device 102 via the wired interface 113. The body performs data interaction with the external device via the wired interface 113, or the body performs power interaction with the external device via the wired interface 113. The power interaction means that the body supplies power to the external device via the wired interface 113, or the external device supplies power to the body via the wired interface 113. When the external device contains an electric device, the first interface then includes at least one data interface 114 for the electric device, and the body sends an instruction to the driving component and/or receives data returned by the driving component via the data interface 114 for the electric device. And the electric means may be a motor.

As described above, when the external device comprises an external battery component, the external battery component may also supply power to the body of the intelligent device via the wired interface 113. For example, the body of the intelligent device is an unmanned aerial vehicle (UAV), and the endurance of the UAV may be improved by connecting with the external device comprising the external battery component.

FIG. 5 is a diagram illustrating the first interface of a second type according to one embodiment of the present disclosure, in which the first interface is a wireless interface 116, and the body of the intelligent device is connected with the external device 102 via the wireless interface 116. The body performs data interaction with the external device 102 via the wireless interface 116. The wireless interface 116 includes at least one or more of WiFi and Bluetooth. When a distance value between the external device 102 and the body is less than a predefined threshold, automatic wireless connection or manual connection with the body via the external device 102 by the user is enabled, the manual connection here including such connections as are enabled by key press, image recognition, speech recognition, gesture recognition, somatic sensation and other means, and the predefined threshold here being a preset distance threshold between the external device 102 and the body. For example, the UAV flight is controlled by a mobile phone, and when the mobile phone and the UAV remain ON at the same time, and when a distance value between both is less than the predefined threshold, automatic connection is established, where the predefined threshold may be 100m, 500m and the like. Another example related to control the UAV flight by a mobile phone, and when the mobile phone and the UAV remain ON at the same time, the user selects connection with the UAV via the keys on the mobile phone.

Further, the first interface is a wired interface and/or a wireless interface.

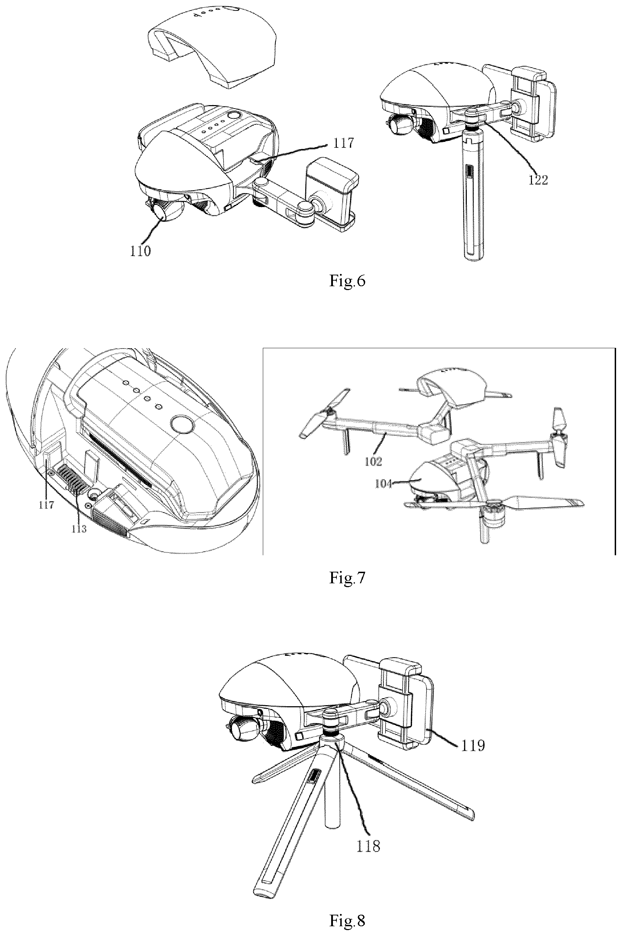

FIG. 6 is a diagram illustrating the first interface of a third type according to one embodiment of the present disclosure, in which the first interface is a structural connection port 117, and the body of the intelligent device is connected with the external device via the structural connection port 117. Further, when the structural connection port 117 is a swallowtail-shaped connection port, the body of the intelligent device is in quick-release connection with the external device via the swallowtail-shaped connection port. For example, a bracket is added to the UAV with a camera, and a structural connection port 117 is arranged at a side of the UAV, the structural connection port 117 being a swallowtail-shaped connection port, then the bracket is in fixed connection with the UAV fuselage via the structural connection port 117, so that the UAV can be configured as a handheld camera.

FIG. 7 is a diagram illustrating the first interface of a fourth type according to one embodiment of the present disclosure, in which the first interface includes both a structural connection port 117 and a wired interface 113. The structural connection port 117 is used for fixed connection or quick-release connection between the external device 102 and the body 104 of the intelligent device, and the wired interface 113 is used for connection between an electronic connection component on the external device 102 and the body. Further, the wired interface 113 is arranged on the structural connection port 117, and when the external device 102 is connected with the body structure via the structural connection port 117, the body is in electronic connection with the external device 102 via the wired interface 113. When the external device 102 comprises an electric device, the body sends an instruction to a driving component and/or receives data returned by the driving component via the wired interface 113, in which the electric device may be a motor. For example, the body 104 of the intelligent device is a UAV fuselage, and the external device 102 is a UAV arm, and when the UAV arm is connected with the UAV fuselage via the structural connection port 117, the motor on the arm is connected with the fuselage controller via the wired interface 113, together forming the entirety of the UAV

FIG. 8 is a diagram illustrating the first interface of a fifth type according to one embodiment of the present disclosure, in which the first interface includes a structural connection port 117 and a wireless interface 116. The structural connection port 117 is used for fixed connection or quick-release connection between the external device and the body of the intelligent device. The wireless interface 116 is used for wireless connection between the external device and the body. According to the combination of the first interfaces of the second type and the third type, the external device comprises a structural connection component 118 and an electronic connecting component 119, of which the structural connection component 118 is connected with the body via the structural connection port 117, and the electronic connection component 119 is connected with the body via the wireless interface 116. For example, a bracket is added at the bottom or side of the UAV, and a mobile phone is provided on the bracket through a mobile phone holder, thereby transforming the UAV into a handheld DV.

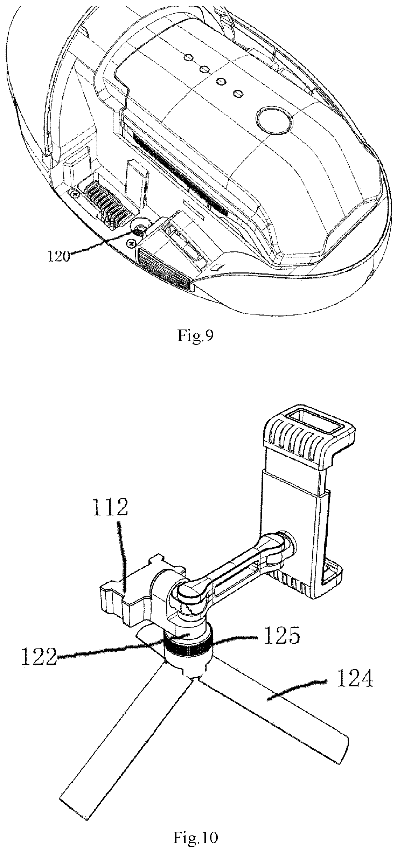

Further, as shown in FIG. 9, the first interface also comprises a communication interface 120, and the body of the intelligent device is connected with an external communication device via the communication interface 120. The external communication device is arranged on the external device, or the external communication device is exactly the external device. The first interface is a wired interface or a wireless interface. If the external communication device is an antenna, the communication module on the body is connected with the antenna via the communication interface, wherein the antenna is arranged on the external device, or the antenna is exactly the external device. If the external communication device is the communication module of the intelligent device, the body controller is connected with the external communication module via the communication interface.

The communication interface, if being a wired one, includes at least one or more of USB, UART, CAN, I2C, SPI, PWM and I/O. While the communication interface, if being a wireless one, includes at least one or more of WiFi and Bluetooth.

FIG. 10 is a diagram illustrating the external device of a first type according to one embodiment of the present disclosure, in which the external device is a structural connection component, and the external device is connected with the body of the intelligent device via the first interface.

In this embodiment, the external device is provided thereon with a second interface 112 that is connection component on the external device corresponding to the first interface 101 on the body, and the external device is connected, especially capable of being quick-release connected, with the body of the intelligent device via the second interface 112. For example, the external device is a bracket 122 or a wristband 140.

When the external device is a bracket 122, the bracket 122 comprises a support part 124 and the second interface 112. The support part 124 is in fixed connection or rotational connection with the second interface 112, the support part 124 is a cylindrical handheld structure or a triangular support structure bifurcated at a lower portion, and the top of the support part 124 is rotationally connected with the second interface 112 via a rotating shaft 125. The bracket 122 is connected with the UAV fuselage with a camera, so that the UAV may be transformed into a handheld camera or a fixed camera for use.

When the external device is a wristband, the wristband is provided with at least one second interface, via which the wristband is connected with the first interface on the body. The wristband is arranged on the UAV fuselage, so that the UAV may be transformed into a portable camera for use.

As shown in FIG. 5, the external device 102 is an electronic connection component. In this example, the electronic connection component may further be a human-computer interaction device, and the first interface on the body of the intelligent device is a wireless interface or a wired interface, so that the human-computer interaction device is connected with the body of the intelligent device via the first interface. The user controls interaction between the human-computer interaction device and the body of the intelligent device by touch control, image recognition, voice, key press and other means. For example, the human-computer interaction device is a mobile phone.

The electronic connection component may also be an external battery, and when the first interface is a wired or wireless interface, the external battery supplies power to the body via the first interface.

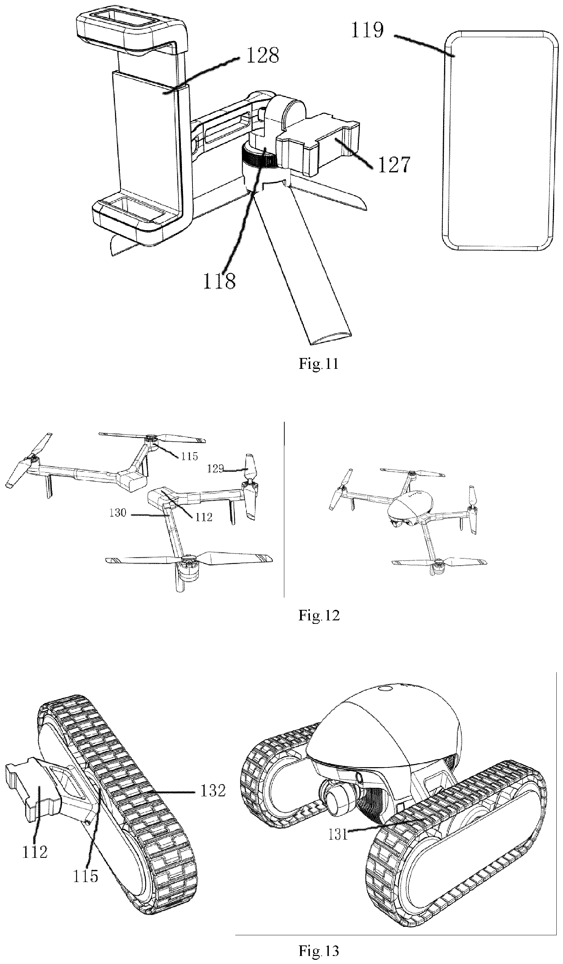

FIG. 11 is a diagram illustrating the external device of a second type according to one embodiment of the present disclosure, in which the external device includes a structural connection component 118 and an electronic connection component 119. In this example, the first interface on the body of the intelligent device includes a structural connection port and a wired or wireless interface, wherein the electronic connection component 119 is in fixed or detachable connection with the structural connection component 118 via the structural connection port on the structural connection component 118, and the external device is connected with the body of the intelligent device via the first interface to form the entirety of the intelligent device. For example, when the electronic connection component 119 is a mobile phone, the structural connection component 118 is a bracket, and the body of the intelligent device is a UAV fuselage, the mobile phone is fixed on the bracket through a mobile phone holder 128 on the bracket, while the mobile phone is in wired or wireless connection with the UAV fuselage, and the bracket is connected with the UAV fuselage via the structural connection port, so that the three components are combined together to form a digital video camera (DV), which is handheld by the user via the bracket, and the camera on the UAV is controlled by the mobile phone to acquire images or videos.

In the examples of the present disclosure, the second interface on the external device is provided thereon with a swallowtail slot 127 in the embodiment of one embodiment, and the external device is in quick-release connection with the body of the intelligent device via such a swallowtail slot 127.

In one embodiment of the present disclosure, the external device is a power device, which is connected with the body of the intelligent device via the first interface, the power device comprising a power system at least comprising a motor. The power system provides power for the external device. The external device is docked with the first interface via the second interface, the second interface comprising a structural connection port and a wired interface arranged on or embedded in the second interface, or the second interface comprising a structural connection port and a wireless interface connected wirelessly with the components of the body.

The body of the intelligent device supplies power to the external device via the first interface.

The external device may also comprise a power supply battery capable of independently supplying power to the external device, and further capable of supplying power to the body of the intelligent device via the second interface and the first interface.

Further, the body comprises a motor driving circuit, through which a control instruction sent by the body controller is converted into a command capable of controlling the operation of the motor, and the command is sent to the motor to drive the same to operate. Or the external device also comprises a motor driving circuit receiving a control instruction sent by the body controller, and converting it into a command capable of controlling the operation of the motor, and the command is sent to the motor to drive the same to operate.

FIG. 12 is a diagram illustrating the external device of a third type according to one embodiment of the present disclosure, in which the external device is a UAV arm 130 that forms a completed UAV together with the UAV fuselage. The UAV arm 130 at least includes a motor and a propeller 129 arranged on the motor. A motor driving circuit is arranged on the UAV arm 130 or the UAV fuselage, to which the controller 103 on the body sends a control instruction, and through which the instruction is converted into a control command as is sent to the motor to drive the same to operate.

FIG. 13 is a diagram illustrating the external device of a fourth type according to one embodiment of the present disclosure, in which the body of the intelligent device is a UAV fuselage, and the external device is a vehicle driving device 131, together forming a completed unmanned ground vehicle (UGV). The vehicle driving device 131 at least includes a motor and wheels, or at least includes a motor and caterpillar track 132. A motor driving circuit is arranged on the vehicle driving device 131 or the UAV fuselage, to which the controller 103 on the body sends a control instruction, and through which the instruction is converted into a control command as is sent to the motor to drive the same to operate.

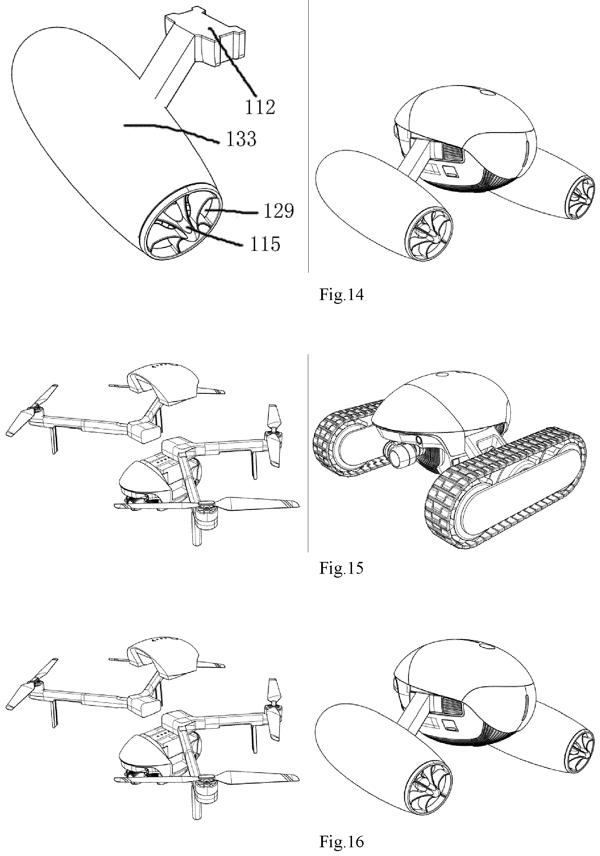

FIG. 14 is a diagram illustrating the external device of a fifth type according to one embodiment of the present disclosure, in which the body of the intelligent device is a UAV fuselage, and the external device is an underwater driving device 133, together forming a completed unmanned ship or submarine. The underwater driving device 133 at least includes a motor and a propeller 129. A motor driving circuit is arranged on the underwater driving device 133 or the UAV fuselage, to which the controller 103 on the body sends a control instruction, and through which the instruction is converted into a control command as is sent to the motor to drive the same to operate.

In the examples of the present disclosure, the external device 102 at least includes one or more of the structural connection component 118, the electronic connection component 119 and a device equipped with a power system. The external device 102 is connected with the body 104 of the intelligent device via the first interface 101, and various external devices 102 are connected with the body to form different intelligent devices.

The device with a power system comprises a power system comprising a motor. The power system provides power for the external device and the body of the intelligent device.

In the examples of the present disclosure, an intelligent device comprises an body of the intelligent device and an external device docked with the first interface on the body via the second interface of the external device so as to enable the quick-release connection between the external device and the body of the intelligent device. There are multiple external devices, including a first external device, a second external device, etc., and the application in a first scenario is achieved when the body is connected with the first external device, and the application in a second scenario is achieved when the body is connected with the second external device.

FIG. 15 is a diagram illustrating a first transformation of the external devices of the intelligent device according to one embodiment of the present disclosure, in which the body of the intelligent device is a UAV fuselage, and the external devices are a UAV arm and a vehicle driving device. The second interface on the external devices comprises a structural connection port and a wired interface. When the UAV arm is connected with the UAV fuselage by means of the docking between the second interface and the first interface, the UAV fuselage and the UAV arm are in wired connection to form a completed UAV. The UAV arm is quickly removed from the UAV fuselage, and when the vehicle driving device is connected with the UAV fuselage by means of the docking between the second interface and the first interface, the UAV fuselage and the vehicle driving device are in wired connection to form a completed UGV, thereby realizing the transformation from the UAV to the UGV. The UAV arm here at least includes a motor and a propeller, and the vehicle driving device at least includes a motor and tires, or at least a motor and caterpillar treads.

FIG. 16 is a diagram illustrating a second transformation of the external devices of the intelligent device according to one embodiment of the present disclosure, in which the body of the intelligent device is a UAV fuselage, and the external devices are a UAV arm and an underwater driving device, the second interface on the external devices comprises a structural connection port and a wired interface. When the UAV arm is connected with the UAV fuselage by means of the docking between the second interface and the first interface, the UAV fuselage and the UAV arm are in wired connection to form a completed UAV. The UAV arm is quickly removed from the UAV fuselage, and when the underwater driving device is connected with the UAV fuselage by means of the docking between the second interface and the first interface, the UAV fuselage and the underwater driving device are in wired connection to form a completed unmanned ship or submarine, thereby realizing the transformation from the UAV to the unmanned ship or submarine. The UAV arm and the underwater driving device here at least include a motor and a propeller.

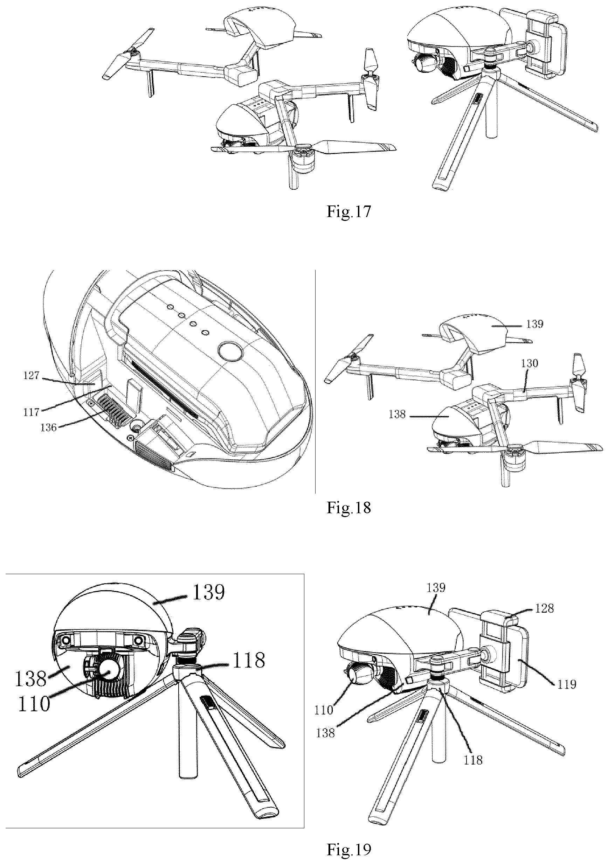

FIG. 17 is a diagram illustrating a third transformation of the external devices of the intelligent device according to one embodiment of the present disclosure, in which the body of the intelligent device is a UAV fuselage, and the external devices are a UAV arm and a bracket. When the UAV arm is connected with the UAV fuselage by means of the docking between the second interface and the first interface, the UAV fuselage and the UAV arm are in wired connection to form a completed UAV. The UAV arm is quickly removed from the UAV fuselage, and when the bracket is in quick connection with the bracket via a structural connection interface of the second interface, and meanwhile a mobile phone on the bracket is connected with the UAV fuselage via a wireless interface, a completed digital video camera (DV) is formed, thereby the transformation from the UAV to the digital video camera realized. The wireless connection here may be manual connection or automatic connection, and in the embodiment of manual connection, the user is needed to select the wireless connection with a communication module on the UAV fuselage by operating the mobile phone. When the distance between the UAV fuselage and the mobile phone is less than a predefined threshold in the embodiment of automatic connection, the mobile phone may receive wireless signals sent by the communication module on the UAV fuselage, thereby realizing the wireless connection therebetween.

In this example, when the body of the intelligent device is a UAV fuselage, the external device may comprise other devices capable to connect with the UAV fuselage via the first interface on the body, and then the transformation from the UAV to other intelligent devices may be achieved by means of the connection between the UAV fuselage and multiple different external devices.

In the example of the present disclosure, the body of the intelligent device may be other intelligent units capable of performing data processing and control, such as a bodywork of an intelligent unmanned ground vehicle.

Therefore, the examples of the present invention provide an intelligent device, comprising a body comprising: a first interface connected with an external device; and a controller connected with the first interface. According to the first interface and the external device, intelligent device modes include a handheld device mode and a self-propelled device mode. When the intelligent device is in the self-propelled device mode, the controller is configured to control the external device.

The handheld device mode refers to the intelligent device used as a handheld device which, for example, may be a handheld camera, a handheld DV, etc. When the intelligent device is in the handheld device mode, the external device connected to the body of the intelligent device may include at least one of a bracket and a wristband.

The self-propelled device mode refers to the intelligent device used as a self-propelled device which, for example, may be an unmanned vehicle, a UAV, an unmanned ship, an unmanned submarine, etc. Herein, the term "self-propelled" means that a device may move, including flying in the air, travelling on the land and navigating on the water, by its own power system. When the intelligent device is in the self-propelled device mode, the external device connected to the body of the intelligent device may include at least one of a UAV arm, an underwater driving device and a vehicle driving device.

FIG. 18 is a diagram illustrating the intelligent device of a first type according to one embodiment of the present disclosure. In this example, the intelligent device comprises a body and an external device;

The body comprises a structural connection port 117 and a master connection contact 136.

The master connection contact 136 is arranged on the structural connection port 117 of the body.

The body is in quick-release connection with the external device via the structural connection port 117, and the master connection contact 136 on the body is in electronic connection with a slave connection contact on the external device after the body is connected with the external device via the structural connection port 117.

The master connection contact 136 is embedded in the structural connection port 117. Further, the structural connection port 117 is a swallowtail slot. The body also comprises a controller 103 electrically connected with the master connection contact 136. The body also comprises a communication module 107 connected with the controller 103. The external device comprises a power system receiving, via the slave connection contact, a control instruction sent by the controller 103. The power system comprises a motor and a motor driving circuit.

There are multiple external devices at least including one or more of a structural connection component 118, an electronic connection component 119 and a device equipped with a power system. The multiple external devices all may be in quick-release connection with the body of the intelligent device, and the body of the intelligent device may be connected with different external devices, thereby forming different intelligent devices.

The device with a power system at least includes one or more UAV arm 130, an underwater driving device 133 and a vehicle driving device 131.

Specifically, the intelligent device is a UAV, the body is a UAV fuselage, and the external device 102 is a UAV arm 130. The UAV fuselage is provided thereon with a structural connection port 117 in the structure of a swallowtail slot, and a master connection contact 136 embedded in the structural connection port 117. The UAV fuselage is divided into a lower fuselage 138 and an upper fuselage 139, and the structural connection port 117 and the master connection contact 136 are arranged on a side of the lower fuselage 138. The structural connection port 117 is a swallowtail slot 127 which, on the side of the lower fuselage 138, corresponds to a swallowtail-shaped bayonet at the end of the UAV arm 130. The slave connection contact is arranged on the swallowtail-shaped bayonet on the arm. When the arm is clamped in the swallowtail slot 127 on the lower fuselage 138, the master connection contact 136 connects with the slave connection contact so as to ensure the electronic connection between the UAV fuselage and the arm. The upper fuselage 139 is clamped with the lower fuselage 138, so that the arm is in fixedly connection with the fuselage to prevent the UAV arm from vibration or displacement relative to the fuselage during flight. Such connection mode as clamping also makes it convenient for the user to replace the UAV arm 130 at any time.

The intelligent device may also be an unmanned ship or an unmanned submarine, then the body is an unmanned ship fuselage or an unmanned submarine fuselage or a UAV fuselage, and the external device is a driving device of the unmanned ship or the unmanned submarine, thereby together forming an unmanned ship or an unmanned submarine.

The intelligent device is an unmanned ground vehicle (UGV), the body is a UGV bodywork or a UAV fuselage, and the external device is a vehicle driving device 131, thereby forming an unmanned ground vehicle.

FIG. 19 is a diagram illustrating the intelligent device of a second type according to one embodiment of the present disclosure. In this example, the intelligent device comprises a body and an external device.

The body comprises a structural connection port and/or a wireless interface or a wired interface.

The body is in quick-release connection with the external device via the structural connection port, and/or the body is connected with the external device via the wireless interface or the wired interface.

The structural connection port is a swallowtail slot. The wireless interface comprises at least one of Bluetooth and WiFi. The body further comprises a controller electrically connected with the wireless interface.

The external device comprises a structural connection component 118 and/or an electronic connection component 119. The body forms different intelligent devices by means of connection with the structural connection component 118 and/or the electronic connection component 119. The structural connection component 118 is in quick-release connection with the body to form an intelligent device. Alternatively, the structural connection component 118 is in quick-release connection with the body, the electronic connection component 119 is in quick-release connection to the structural connection component 118, and the body is connected with the electronic connection component 119 via the wireless interface to form an intelligent device. Alternatively, the body is connected with the electronic connection component 119 via the wireless interface or the wired interface to form an intelligent device.

When the external device is an electronic connection component 119, and a distance value between the body and the external device 102 is less than a predefined threshold, automatic connection is established between the body and the external device via the wireless interface 116 or the wired interface 113.

The external device is a human-computer interaction device that establishes connection with the body manually or automatically.

Specifically, the body of the intelligent device is a UAV fuselage with a camera 110, and the external device is a structural connection component 118 that may be handheld. The UAV fuselage is divided into a lower fuselage 138 and an upper fuselage 139. The structural connection port that is a swallowtail slot is arranged on a side of the lower fuselage 138. The swallowtail slot on the side of the lower fuselage 138 corresponds to a swallowtail-shaped bayonet at the end of the structural connection component 118. When the structural connection component 118 is clamped in the swallowtail slot of the lower fuselage 138, the upper fuselage 139 is clamped with the lower fuselage 138 so as to together form a handheld camera, thereby preventing the structural connection component 118 from vibration or displacement relative to the fuselage during use. Such connection mode as clamping also makes it convenient for the user to replace the structural connection component 118 at any time.

Specifically, the body of the intelligent device is a UAV fuselage with a camera 110, and the external device is a structural connection component 118 that may be handheld and a mobile phone. The UAV fuselage is divided into a lower fuselage 138 and an upper fuselage 139. The structural connection port 117 that is a swallowtail slot is arranged on a side of the lower fuselage 138. The swallowtail slot on the side of the lower fuselage 138 corresponds to the swallowtail-shaped bayonet at the end of the structural connection component 118. When the structural connection component 118 is clamped in the swallowtail slot of the lower fuselage 138, the upper fuselage 139 is clamped with the lower fuselage 138, and the mobile phone is fixedly connected to the structural connection component 118 via a holder 128 at the same time, so that the mobile phone is connected with the UAV fuselage via the wireless interface or the wired interface, thereby together forming a handheld digital video camera. Such connection mode as clamping also makes it convenient for the user to replace the external device at any time.

Specifically, the body of the intelligent device is a UAV fuselage, and the external device is a mobile phone connected with the UAV fuselage via the wireless interface or the wired interface to control the UAV to fly or shoot pictures.

Through the above manners, the UAV may be easily and fast transformed into various intelligent devices to meet the usage requirements in different scenes.

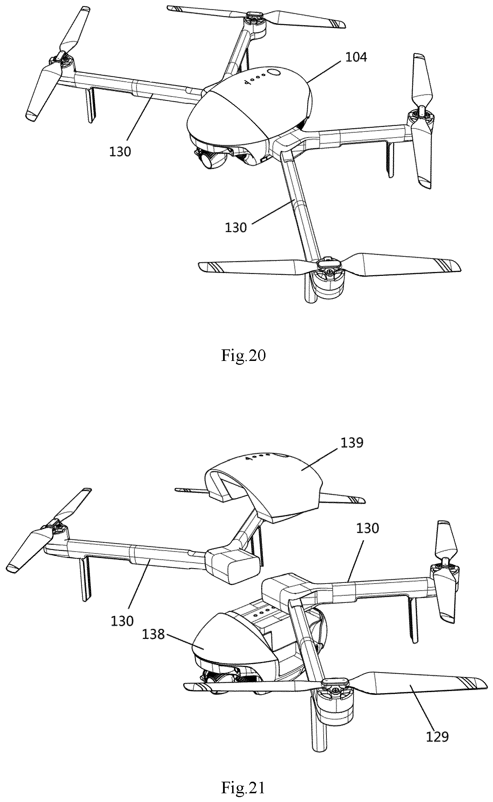

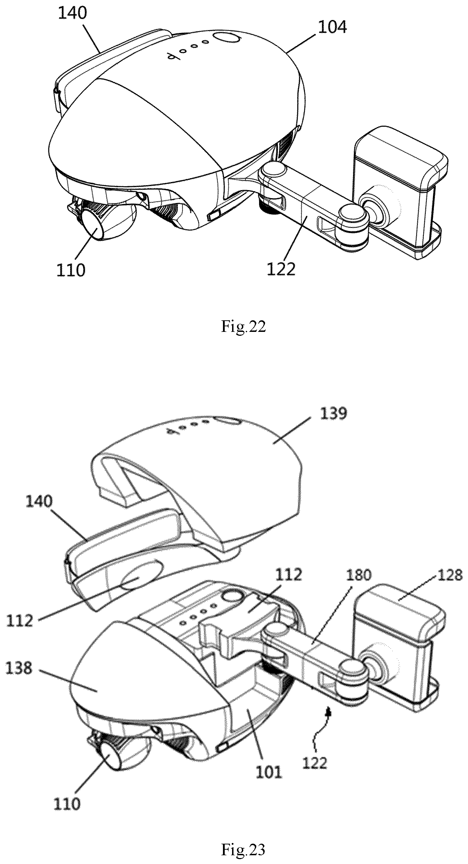

FIG. 20 is an assembly diagram of an intelligent device according to one embodiment of the present disclosure in the mode of a UAV product. FIG. 21 is an exploded view of the components of the intelligent device according to one embodiment of the present disclosure in the mode of a UAV product. FIG. 22 is an assembly diagram of an intelligent device according to one embodiment of the present disclosure in the mode of a handheld DV product. and FIG. 23 is an exploded view of the components of the intelligent device according to one embodiment of the present disclosure in the mode of a handheld DV product

In this example, the intelligent device comprises a body 104, a UAV arm 130 and a bracket 122. The body 104 comprises a first interface 101 for alternatively connecting the UAV arm 130 or the bracket 122. The first interface 101 may be in a slot structure, a hole structure, a snap structure, etc., which is not limited by the present disclosure.

When the intelligent device is used as a UAV, the UAV arm 130 is mounted on the first interface 101. When the intelligent device needs to be used as a handheld device or a monitoring device, the UAV arm 130 may be removed from the first interface 101 and replaced with the bracket 122.

The bracket 122 may be a handheld bracket or a fixed bracket. When the bracket 122 is a handheld bracket, the user may hold the intelligent device by holding the bracket 122. The handheld bracket, for example, may include a handle or a holding rod. When the bracket 122 is a fixed bracket, the intelligent device may be supported on the ground or table top through the bracket 122. For example, the fixed bracket may comprise a tripod.

As shown in FIGS. 6, 8 and 10, the bracket 122 comprises a support part 124 and a second interface 112. The support part 124 is in fixed connection or rotational connection with the second interface 112, the support part 124 is a cylindrical handheld structure or a triangular support structure bifurcated at a lower portion, and the top of the support part 124 is rotationally connected with the second interface 112 via a rotating shaft 125. The bracket 122 is connected with the body 104 with a camera, so that the UAV may be transformed into a handheld camera or a fixed camera for use.

In addition to the handheld bracket and the fixed bracket as described above, the bracket 122 may also be a bracket of another type, which is not limited by the present disclosure. In one embodiment, the bracket 122 may be an ordinary bracket without handholding function or supporting function.

Further, the intelligent device may also comprise an electronic connection component 119 in quick-release connection to the bracket 122.

When the electronic connection component 119 needs to be mounted on the body 104 of the intelligent device, the UAV arm 130 may be removed from the first interface 101 and replaced with the bracket 122, then the electronic connection component 119 is mounted on the bracket 122, the electronic connection component 119 is in communication with the body 104 by a close distance, and the body 104 transmits in real time a captured image to the electronic connection component 119 for display, so as to set the intelligent device into the mode of a handheld DV product. In this way, the intelligent device may be switched between various product modes, expanding the function of the intelligent device and meeting the diverse needs from users.

The connection between the body 104 and the electronic connection component 119 may be established by wired or wireless means. The electronic connection component 119 may be a mobile phone, and the wireless connection here may be manual docking or automatic docking. In the embodiment of manual docking, the user needs to select the wireless connection with a communication module on the body 104 of the intelligent device by operating the mobile phone. When the distance between the body 104 of the intelligent device and the mobile phone is less than a predefined threshold in the embodiment of automatic docking, the mobile phone may receive wireless signals sent by the communication module on the body 104 of the intelligent device, thereby establishing the wireless connection therebetween. The mobile phone may be fixed on the bracket through a mobile phone holder 128 on the bracket.

In this example, the intelligent device comprises two UAV arms 130, the body 104 comprises two first interfaces 101, and the intelligent device further comprises a wristband 140. The two first interfaces 101 are symmetrically arranged on both sides of the body 104, of which one first interface 101 is used to alternatively connect the UAV arm 130 or the bracket 122, and the other is used to alternatively connect the UAV arm 130 or the wristband 140.

When the intelligent device is used as a UAV, the two UAV arms 130 are mounted on the two first interfaces 101 respectively. When it is needed to switch the intelligent device to a handheld DV mode, the two UAV arms 130 may be removed from the first interfaces 101, then the bracket 122 for fixing the electronic connection component may be mounted on one first interface 101, and the wristband 140 may be mounted on the other first interface 101 to set the intelligent device into the handheld DV product mode.

As shown in FIG. 23, the bracket 122 comprises a second interface 112 for connecting with the first interface 101, and a holder 128 for gripping the electronic connection component 119, the holder 128 being connected to the second interface 112.

As shown in FIG. 23, further, the bracket 122 may also comprise a connecting rod 180 having one end rotatably connected with the second interface 112 and the other end rotatably connected with the holder 128. In this way, the position and angle of the electronic connection component 119 relative to the body 104 may be flexibly adjusted.

The structure of the UAV arm 130 in the example of the present disclosure will be described in detail below.

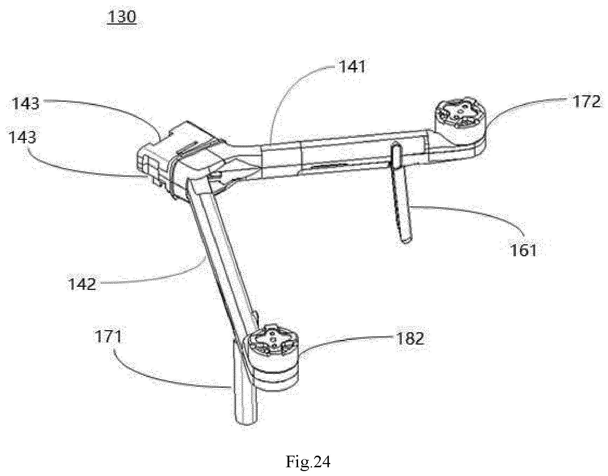

FIG. 24 shows a UAV arm 130 according to a first example of the present disclosure. As shown in FIG. 24, the UAV arm comprises a first arm 141 and at least one second arm 142. Among them, the second arm 142 is hinged with the first arm 141 via a damping component 160 (as described in detail later) and may rotate between an unfolded state and a folded state. FIG. 24 exhibits an unfolded state. In the embodiment that the second arm 142 is in an unfolded state relative to the first arm 141, as shown in FIG. 24, by overcoming a damping force of the damping component 160, the second arm 142 may be enabled to rotate towards the first arm 141 (as rotating counterclockwise in FIG. 24) and get into the folded state. In the folded state, the second arm 142, for example, is approximately close to and parallel to the first arm 141. At the time of storing the UAV arm 130, by setting the second arm 142 into the folded state, the volume of the UAV arm 130 may be greatly reduced to meet the demand for lower space occupation.

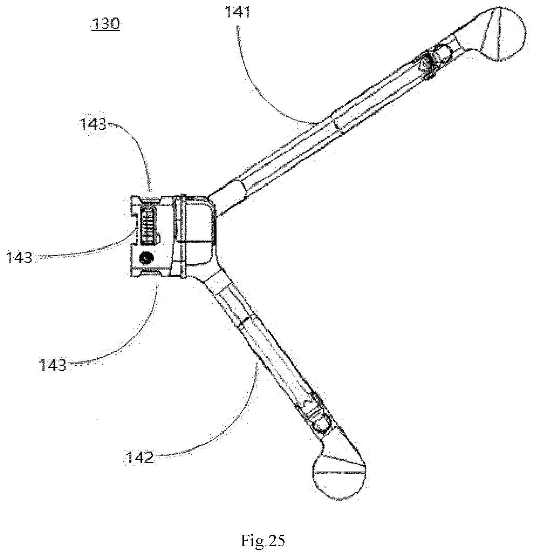

As shown in FIG. 24, in order to facilitate the assembly and connection between the UAV arm 130 and the body 104 of the intelligent device, a first slot 143 may be arranged on a side of the first arm 141. The first slot may be in the form of a swallowtail slot, so that the UAV arm 130 and the body 104 of the intelligent device may be easily assembled by inserting a swallowtail-shaped insert on the body 104 of the intelligent device into the first slot 143, and they may be disassembled easily. As shown in FIGS. 24 and 25, the three sides of the first arm 141 (*i.e.,* a first side, a second side and a third side respectively) are provided with the first slot 143 respectively. A person skilled in the art may understand that the present disclosure is not limited to this, namely that the first slot 143 may be arranged only on one of the sides, or on two of the sides.

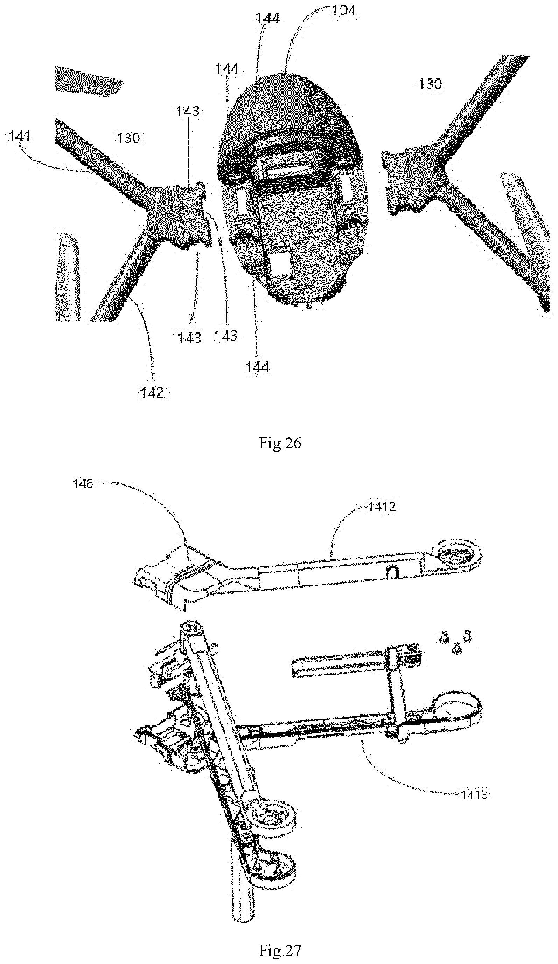

FIG. 26 shows the connection relation between the body 104 of the intelligent device and the UAV arm 130. As shown in FIG. 26, three swallowtail-shaped inserts 144 are arranged on the body 104 of the intelligent device, their positions correspond to the three first slots 143 on the first arm 141 of the UAV arm 130 respectively, and the shapes complement each other, so that the body 104 of the intelligent device and the UAV arm 130 may be conveniently connected and disassembled.

A person skilled in the art readily understands that a swallowtail-shaped insert may also be arranged on a side of the first arm 141, and a swallowtail slot is arranged on the body 104 of the intelligent device. Alternatively, a swallowtail-shaped insert and a swallowtail slot may be arranged on the sides of the first arm 141 respectively, and a swallowtail slot and a swallowtail-shaped insert may be correspondingly arranged on the body 104 of the intelligent device, all of which are within the protection scope of the present disclosure. Certainly, the first slot 143 may also be shaped otherwise.

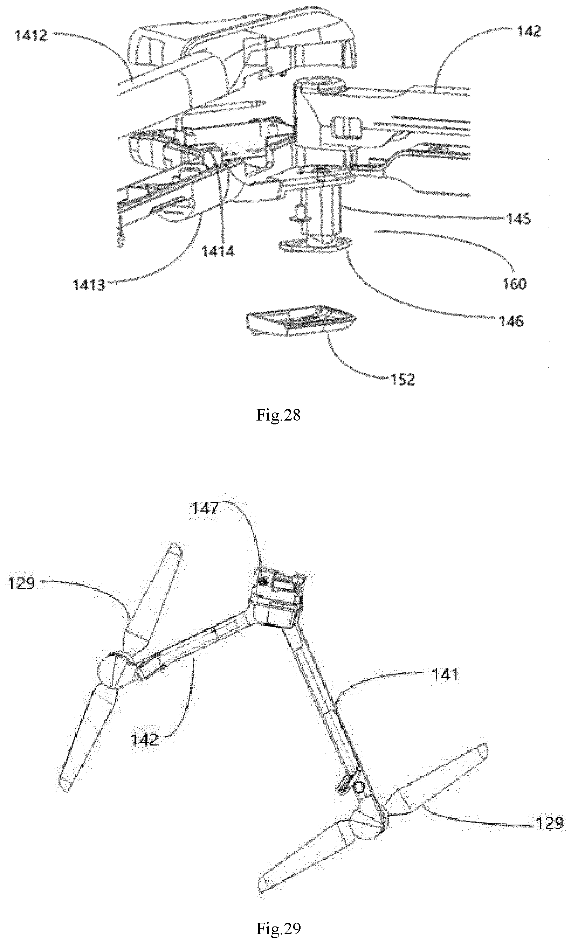

FIGS. 27 and 28 show exploded views of the UAV arm 130 respectively. As shown in FIG. 27, the first arm 141 comprises an upper cover 1412 and a lower cover 1413, both of which are connected together by, for example, bolts, thereby facilitating disassembly and assembly.

As shown in FIG. 28, at least one protrusion 1414 is arranged inside the lower cover 1413, a threaded hole is arranged in the middle of the protrusion 1414, and a threaded hole may also be arranged at a position on the upper cover 1412 corresponding to the protrusion. The upper cover 1412 and the lower cover 1413 may be connected together just by passing a screw through the threaded hole of the upper cover and the protrusion 1414.

FIG. 29 shows a view of the UAV mechanism 130 as viewed from below. As shown in FIG. 29, the first arm 141 is provided thereon with at least one aperture 147, for example, an aperture for an electronic connection interface, including an antenna interface and a circuit connection interface. As shown in FIG. 29, a propeller 129 and a motor (as described below) are provided on both the first arm 141 and the second arm 142. The motor needs electricity to drive the propeller 129. For this purpose, the motor, for example, may receive power from a battery on the body 104 of the intelligent device via the circuit connection interface in the aperture 147 so as to drive the propeller. In addition, the circuit connection interface may also comprise a control interface. For example, the controller on the body 104 of the intelligent device may control the rotational speed, angle and other parameters of the propeller 129 via the control interface so as to control the moving direction, altitude, velocity and other motion parameters of the UAV.

According to one embodiment of the present disclosure, the upper cover 1412 of the first arm 141 is provided with a second slot 148. As shown in FIG. 27, the second slot 148 is, for example, a small strip-shaped groove, the function of which is that after the arm is clamped into the lower part of the fuselage via the first slot 143, the upper fuselage 139 has a protrusion corresponding to the second slot 148, and then the upper body 139 is combined with the lower body 138 and then is just clamped into the second slot to ensure that the arm will not shake during flight.

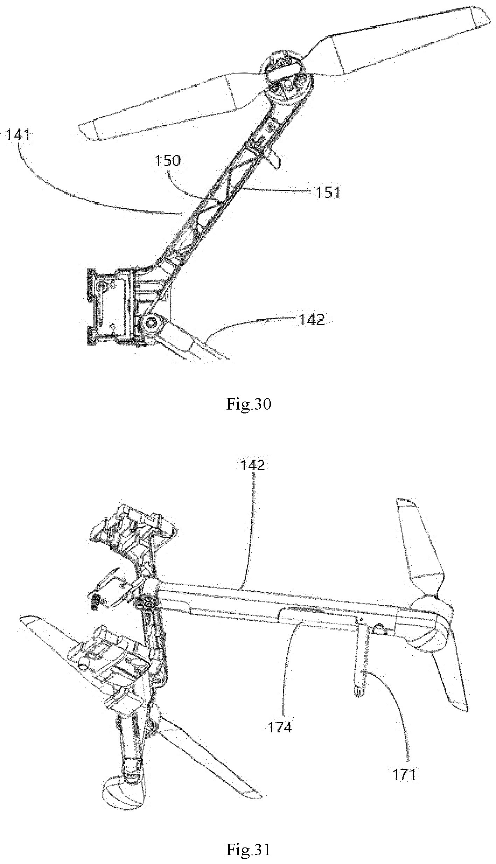

FIG. 30 shows an enlarged view of the first arm 141, in which the upper cover 1412 of the first arm 141 is removed in order to show the internal structure of the first arm 141. As shown in FIG. 30, at least one reinforcing component is arranged inside the first arm 141 to increase the structural strength of the first arm 141. As shown in FIG. 30, the reinforcing component comprises, for example, transverse baffles 150 and lateral baffles 151 between the inner walls of the first arm 141. With the transverse baffles 150 and the lateral baffles 151 may the structural strength of the first arm 141 be effectively improved, meanwhile, the first arm 141 remains substantially a hollow structure, light in weight, thereby helping to reduce the flight load.

The structure of the first arm 141 has been described in detail above, for example, comprising an upper cover and a lower cover, as well as a reinforcing component inside the same. Similar to the first arm 141, the second arm 142 may also include an upper cover and a lower cover provided with at least one protrusion. Screw holes are arranged in the center of the protrusion and a position of the upper cover corresponding to the protrusion, so that the upper cover and the lower cover are connected via bolts. The lower cover and the upper cover are connected by bolts, and at least one reinforcing component may also be arranged inside the second arm 142 to increase the structural strength of the second arm, for example transverse baffles and lateral baffles between the inner walls of the second arm 142. No more description will be made here.

A detailed structure of the damping component 160 will be described below referring to FIG. 28. As shown in FIG. 28, the damping component 160 comprises a damping shaft 145 and a fixed plate 146. A plurality of connecting holes are arranged on the fixed plate 146. The damping shaft 145 is fixedly arranged on the fixed plate 146, and the bolt or screw passes through the connecting hole of the fixed plate 146 so as to fix the fixed plate 146 to the first arm 141. The damping shaft may be a damping component in the prior art, capable of providing a certain amount of damping force. The damping shaft 145 is fixedly arranged on the first arm 141, and has one end engaged with the second arm 142, so that the second arm 142 may rotate relative to the first arm 141 when a certain pressure is applied externally enough to overcome the damping force of the damping shaft 145. The damping shaft is mounted with a certain preloading angle for the purpose of compensating for the gap caused by such mounting. The damping force predetermined in the damping shaft may overcome such problems as arm retreat caused by motor vibration so as to maintain the working state. The arm, when being stored, is manually rotated to overcome the maximum damping force and then may get into the storage state. A specific structure of the damping shaft 145 will not be described in detail here.

In addition, the damping component 160 may also comprise a cover plate 152 for covering the fixed plate 146, thereby fitting the recess of the first arm 141 to cover the fixed plate 146 and the damping shaft 145. Furthermore, as viewed from the outside, the surface of the first arm 141 is smooth, and this is conducive to improving the aesthetics and safety thereof.

A second example of the present disclosure relates to a UAV arm, which will be described below referring to the accompanying drawings.

As shown in FIG. 24, the UAV arm 130 comprises a first arm 141 and a second arm 142. The second arm 142 is hinged with the first arm 141 via a damping component 160, so that the second arm 142 may rotate towards the first arm 141 by overcoming the damping force of the damping component 160 when the second arm 142 is in an unfolded state relative to the first arm 141. In addition, the first arm 141 is provided thereon with a UAV unipod 161, and the second arm 142 is provided thereon with a UAV unipod 171.

The UAV unipods 161 and 171 are preferably capable of rotating relative to the first arm 141 and the second arm 142 of the UAV to be unfolded or folded. For example, the UAV unipods 161 and 171, when unfolded, become perpendicular to the first arm 141 and the second arm 142 and are in one plane with them, while the UAV unipods 161 and 171, when folded, may be embedded in the first arm 141 and the second arm 142.

FIG. 31 shows a second unipod 171. As shown in FIG. 31, the second arm 142 has at the lower end thereof a recess 174 having a length approximately the same as that of the second unipod 171, for example. As shown in FIG. 31, the second unipod 171 is in an unfolded position. When the second unipod 171 rotates clockwise in the figure, it may be folded and embedded into the second arm 142. The folding mode of the first unipod 161 is similar to that of the second unipod 171, and no more description will be made here.

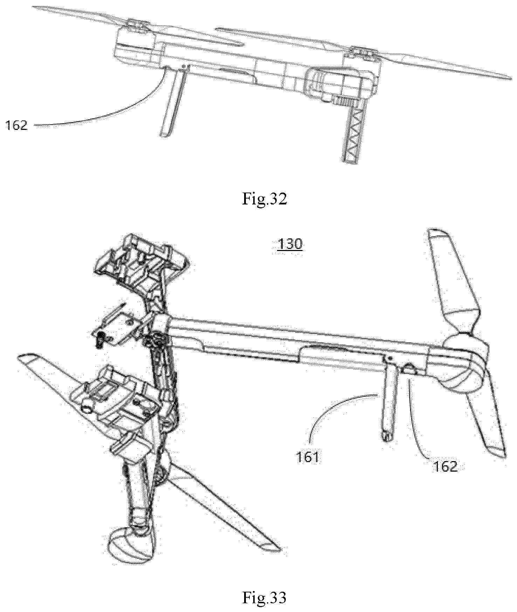

The folding mechanism and folding operation of the first unipod 161 will be described below referring to FIGS. 32-36.

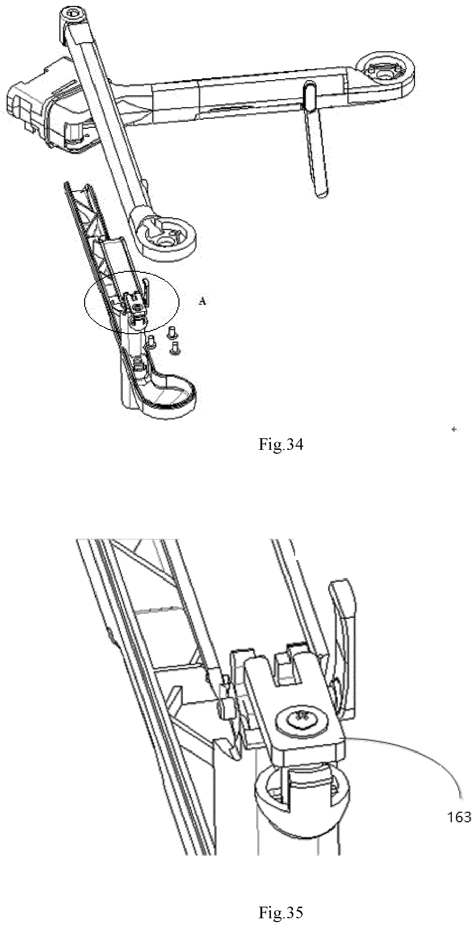

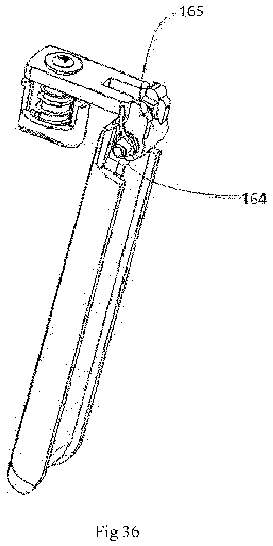

Among them, FIG. 32 is a perspective view of the UAV arm 130. FIG. 33 is an exploded view of the UAV arm 130; FIG. 34 is an exploded view of the UAV arm 130 at another angle; FIG. 35 is an enlarged view of the circle area A in FIG. 34. and FIG. 36 is a perspective view of a retractable component.

The UAV arm 130 also comprises a switch component comprising a button 162 located on the arm as shown in FIGS. 32 and 33. After the button 162 is pressed, the first unipod 161 may retract automatically. The switch component further comprises an internal first movable component 163. The UAV arm 130 further comprises a retractable component comprising an elastic shaft 164 and a second movable component 165. After the button 162 is pressed, the first movable component 163 is driven to move to release the restriction on the second movable component 165 of the retractable component, and the first unipod 161 is driven to retract by means of the elastic force of the elastic shaft 164 of the retractable component.

The switch component may control the UAV unipod to unfold and retract. The retractable component may automatically retract the unipod after the switch component is actuated, so that the unipod is embedded in the UAV arm.

The switch component comprises an elastic component and a first movable component. The retractable component comprises an elastic shaft and a second movable component. The elastic component is connected with the first movable component to drive the first movable component to move. The second movable component and the unipod bracket being sleeved on the elastic shaft, after the first movable component moves under the drive of the elastic component, and after the first movable component and the second movable component are disconnected from contact, the elastic shaft drives the unipod bracket to retract automatically. The elastic component comprises a spring and a key. The spring is in fixed connection with the key, and the switch component is controlled by pressing the key.

The folding mechanism and folding operation of the second unipod 171 are similar to those of the first unipod 161, and no more detailed description will be made here.

A third example of the present disclosure relates to a UAV arm. The description will be made below referring to the accompanying drawings.

As shown in FIG. 24, the UAV arm 130 comprises a first arm 141 and a second arm 142. The second arm 142 is hinged with the first arm 141 via a damping component 160, so that the second arm 142 may rotate towards the first arm 141 by overcoming the damping force of the damping component 160 when the second arm 142 is an unfolded state relative to the first arm 141. Among them, the first arm 141 and the second arm 142 are provided at one end thereof with a first motor 172 and a second motor 182 in fixed connection thereto, respectively.

In addition, the first motor 172 and the second motor 182 are respectively provided thereon with propellers 129 in quick-release connection to the first motor 172 and the second motor 182 via a propeller clamp (as described below).

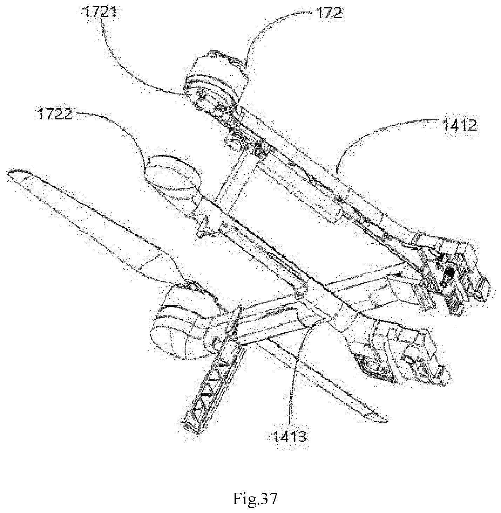

FIG. 37 shows a clearer exploded view of the first motor 172. As shown in FIG. 37, the first motor 172 comprises a fixed tray 1722 and a motor body 1721. The fixed tray 1722 is connected with the lower cover 1413 of the first arm 141 and is connected with the bottom portion of the motor body 1721. A plurality of screw holes are arranged on the fixed tray 1722 for connection with the arm. The motor body 1721 is connected with an arm screw via the fixed tray 1722. Further preferably, as shown in FIG. 37, the motor body 1721 is connected with the upper cover 1412 of the first arm.

The structure and installation of the first motor 172 have been described in detail above. The structure and installation of the second motor 182 are similar to those of the first motor 172, and no more description will be made here.

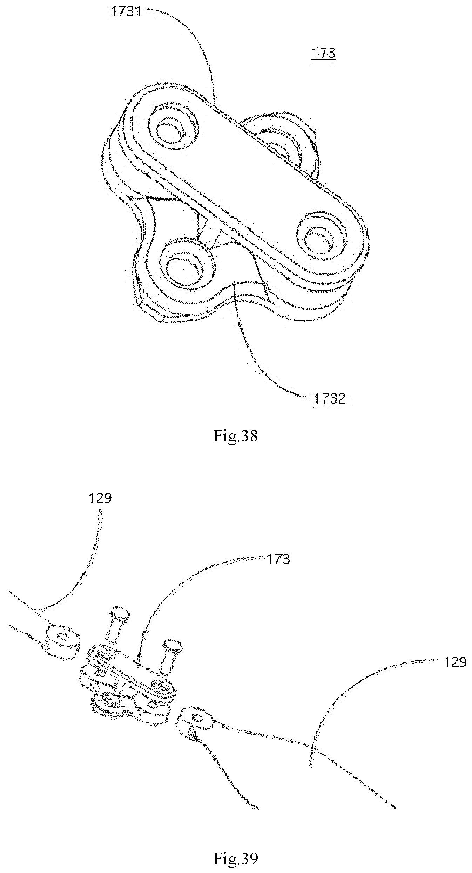

FIG. 38 shows a perspective view of a propeller clamp 173. As shown in FIG. 38, the propeller clamp 173 comprises a 1-shaped upper propeller cover 1731 and a cruciform lower propeller cover 1732, both of which are connected via a central column. Both ends of the 1-shaped upper propeller cover 1731 and the four corners of the cruciform lower propeller cover 1732 are provided with through holes, and through holes at both ends of the 1-shaped upper propeller cover correspond to one through hole on the cruciform lower propeller cover, respectively.

FIG. 39 shows the connection mode between the propeller clamp 173 and the propeller 129. As shown in FIG. 39, a through hole is provided at the hub of the blade root of the propeller 129. A pin shaft passes through the through holes of the upper propeller cover, the lower propeller cover and the blade, so that the propeller is connected with the propeller clamp.

In addition, the first motor and the second motor are provided thereon with a slot suitable for the propeller clamp to ensure the smooth connection between the propeller clamp and the motor.

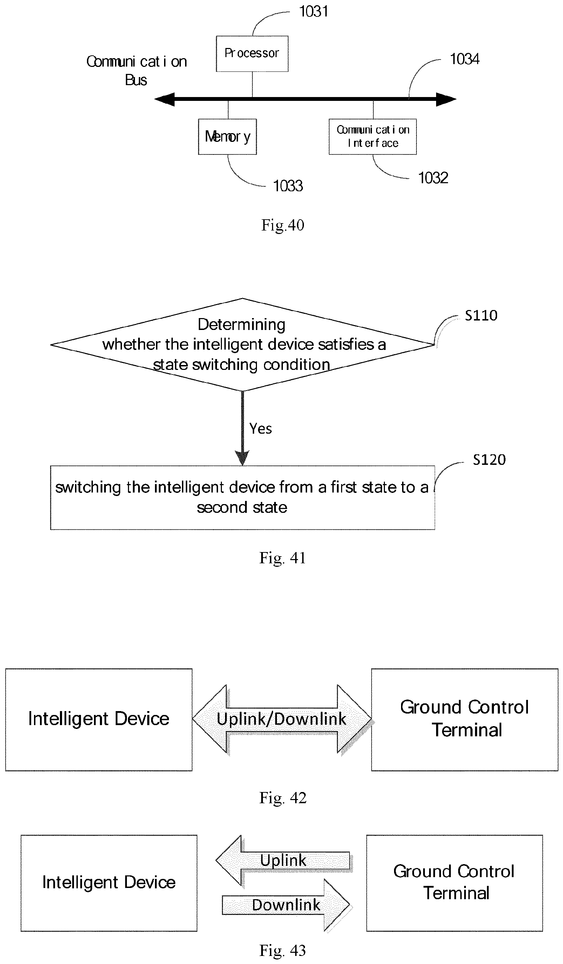

Please refer to FIG. 40 that is a structural schematic diagram of the internal components of the body of the intellectual device according to one embodiment of the present application, in which the controller of the body may comprise at least one processor 1031, *e.g.,* a CPU, at least one communication interface 1032, at least one memory 1033, and at least one communication bus 1034 for enabling the direct connection communication among these components. Among them, the communication interface 1032 of the device in the example of the present application is used for signaling or data communication with other node devices. The memory 1033 may be a high-speed RAM memory, or may be a non-volatile memory, e.g., at least one disk memory. The memory 1033 may optionally be at least one storage device located away from the aforementioned processor. Computer readable instructions being stored in the memory 1033, when the computer readable instructions are executed by the processor 1031, the intelligent device performs the method or process as shown in FIG. 41 below.

Please refer to FIG. 41 that shows a flowchart of a switching method provided by the example of the present application. The method may be applied to the aforesaid intelligent device, comprising the following steps:

Step S110: determining whether the intelligent device satisfies state switching conditions.

In the example of the present application, the intelligent device may be applied to a variety of application scenarios. In order to meet different application scenarios, the intelligent device may implement state switching. For example, when the intelligent device is shooting in flight, it is switched to a flight shooting state; when the intelligent device is shooting on the ground, it is switched to a ground shooting state; and when the intelligent device is used as a monitoring device, it is switched to a monitoring state.

When the intelligent device performs state switching, a ground control terminal may send to the intelligent device a state switching instruction for instructing the intelligent device to switch from a current state to a target state, and after the intelligent device receives the state switching instruction, it may be determined that the intelligent device satisfies the state switching conditions. Alternatively, because the change of state may cause the data as is detected by the intelligent device *per se* to be different, the intelligent device may also self-detect whether the state switching conditions are met. For example, when the intelligent device detects that the current state is ground shooting, this indicates that the state switching conditions are met at this time, and then the intelligent device may be automatically switched to the ground shooting state; or when the intelligent device detects that the current state is flight shooting, this indicates that the state switching conditions are met at this time, and then the intelligent device may be automatically switched to the flight shooting state.

When the state switching conditions are met, step S120 is performed.

Step S120: switching the intelligent device from a first state to a second state.

When the intelligent device satisfies the state switching conditions, the intelligent device may be switched from the first state to the second state, so that the intelligent device may operate in the second state, thereby enabling the intelligent device to be switched to a state required by one of diverse application scenarios to allow the intelligent device to be applicable to a variety of application scenarios.

As an example, the state parameter of the intelligent device varies with the state, *i.e.,* the switching of the intelligent device from the first state to the second state may be the switching of the state parameters, to be more specific, a first state parameter of the intelligent device in the first state is switched to a state parameter of the same in the second state at the time of controlling the intelligent device to switch from the first state to the second state.

Among them, the following several embodiments exist in the switching between the state parameters:

Embodiment I: a first bandwidth of an image transmission module of the intelligent device in the first state is switched to a second bandwidth in the second state.

Among them, the image transmission module is used by the intelligent device to transmit images to the ground control terminal. The image transmission module may be a wireless-fidelity (WiFi) image transmission module, a 5.8G wireless image transmission module, etc.

In order to implement the application of the image transmission module in various states, the bandwidth of the image transmission module may vary with the state. For example, when a distance between the intelligent device and the ground control terminal is close, then the intelligent device is in the first state, and the bandwidth of the image transmission module may be relatively higher, so that the image transmission module may be directly connected to the ground control terminal; and when a distance between the intelligent device and the ground control terminal is far, then the intelligent device is in the second state, and the bandwidth of the image transmission module may be relatively lower, so as to ensure the long-distance communication between the intelligent device and the ground control terminal.

Alternatively, when the intelligent device transmits a large image, it is then in the first state, and the bandwidth of the image transmission module may be set to be larger; and if the image transmitted by the intelligent device is small, then the intelligent device may be in the second state, and the bandwidth of the image transmission module may be adjusted to be smaller.

It may be understood that the image transmission module may have different bandwidths in different states, and the bandwidth in each state may be preset. When the intelligent device is switched from the first state to the second state, and if this involves an adjustment to the bandwidth of the image transmission module, then the bandwidth of the image transmission module just may be switched correspondingly.

Embodiment II: a first transmit power of the image transmission module of the intelligent device in the first state is switched to a second transmit power in the second state.

For example, when a distance between the intelligent device and the ground control terminal is close, then the intelligent device is in the first state, and the transmit power of the image transmission module may be relatively lower, so that the image transmission module may be coupled with the ground control terminal at a close distance and reduce wireless radiation; and when a distance between the intelligent device and the ground control terminal is far, then the intelligent device is in the second state, and the transmit power of the image transmission module may be relatively higher, so as to ensure the long-distance communication between the intelligent device and the ground control terminal.

Alternatively, when the intelligent device transmits a large image, it is then in the first state, and the transmit power of the image transmission module may be set larger; and if the image transmitted by the intelligent device is small, then the intelligent device may be in the second state, and the transmit power of the image transmission module may be adjusted to be smaller.

It may be understood that the image transmission module may have different transmit power in different states, and the transmit power in each state may be preset. When the intelligent device is switched from the first state to the second state, and if this involves an adjustment to the transmit power of the image transmission module, then the transmit power just needs to be switched correspondingly.

Embodiment III: a first brightness of an indicator lamp on the intelligent device in the first state is switched to a second brightness in the second state.

The indicator lamp on the intelligent device may be used to display at different degrees of brightness in different states. For example, the brightness of the indicator lamp may be lower if the intelligent device is in normal operation; and if some component of the intelligent device is in failure, the brightness of the indicator lamp may be adjusted to be higher, so that the staff may easily notice the failure and further take timely measures.

Alternatively, multiple indicator lamps may be arranged on the intelligent device, and different states may be represented by different combined brightness of indicator lamps. For example, assuming that there are 3 indicator lamps on the intelligent device, all 3 indicator lamps may be ON in the flight shooting state, only 2 indicator lamps need to be ON in the ground shooting state, and only 1 indicator lamp needs to be ON in other shooting states. Certainly, the above is exemplary only, and other brightness combinations may be further employed to represent different states in practical application.

Embodiment IV: a first color of the indicator lamp on the intelligent device in the first state is switched to a second color in the second state.

In order to identify various states of the intelligent device, each state may also be represented by setting the color of the indicator lamp, *i.e.,* the color to be displayed by the indicator lamp of the intelligent device varies with the state. For example, the indicator lamp is in green in the flight shooting state, and the indicator lamp is in red or any other color in the ground shooting state. Alternatively, multiple indicator lamps may be arranged on the intelligent device, and the indicator lamps may display different color combinations in different states. For example, assuming that there are 3 indicator lamps, the 3 indicator lamps are displayed in a "red-green-red" combination in the flight shooting state, while the 3 indicator lamps are displayed in a "red-red-yellow" combination or only two of them are displayed, for example only two indicator lamps are displayed in two colors as "red-yellow", in the ground shooting state. Certainly, the above is exemplary only, and other color combinations may be further employed to represent different states in practical application.

In addition, the embodiments as listed above are only those possible embodiments of switching of the state parameters. The practical application may further involve switching of other state parameters, such as switching of power, switching of camera parameter, switching of communication parameter and others. Certainly, there may also be other switching than the state parameters, for example switching of antennas. The embodiments of communication parameters and antenna switching will be described below.

Embodiment V: a first communication parameter of the intelligent device in the first state is switched to a second communication parameter of the intelligent device in the second state.

Among them, at the time of uplink transmission of data to the intelligent device (*i.e.,* the ground control terminal transmits data to the intelligent device), this is mainly directed to control signals, while the data volume is small, so data stability, communication distance, penetration ability and diffraction ability need to be better guaranteed in the uplink transmission of data; and at the time of downlink transmission of data from the intelligent device (*i.e.,* the intelligent device transmits data to the ground control terminal), this mainly involves image data, and the clearer the images, the better, so greater data throughput is needed during the downlink transmission of data.

Generally, the wireless communication links of an intelligent device are designed to be symmetrical, *i.e.,* the uplink transmission and the downlink transmission employ the same wireless communication mode (*i.e.,* using the same communication link), as shown in FIG. 42, using the same communication protocol, including frequency division multiplexing, time division multiplexing, *etc.;* furthermore, the compatibility between coverage and data throughput capacity needs to be taken into account if the same communication link is employed.

But an asymmetric communication protocol structure may be adopted in one embodiment of the present application. As shown in FIG. 43, different wireless communication modes are used between the intelligent device and the ground control terminal, which may satisfy the demands for different data communication characteristics in uplink transmission and downlink transmission. The uplink transmission particularly takes such advantageous measures in long-distance communication as are strong in penetration ability and diffraction ability, and the downlink transmission uses large-rate and high-stability transmission that satisfies image transmission.

Among them, the uplink data communication uses a frequency band less than 1GHz, and the wireless signal is low in frequency, long in wavelength, strong in the ability to bypass obstacles, and larger in signal coverage in the same communication environment. The uplink data communication adopts a data modulation mode with lower frequency, and the simpler the modulation mode, the lower the receiving sensitivity of the device, and the larger the signal coverage in the same communication environment. While the downlink data communication uses a frequency band of 2.4GHz or 5GHz, and the wireless signal is high in frequency and short in wavelength; good communication requires an unobstructed distance, and a good sight distance from the sky to the ground. The downlink data communication adopts a higher-rate data modulation mode, and the more complex the modulation mode, the higher the receiving sensitivity of the device, and the stronger the data throughput capacity in the same communication environment.

Among them, when the intelligent device needs to transmit data to the ground control terminal, the communication mode may be switched to the downlink communication mode, and when the ground control terminal needs to transmit data to the intelligent device, the communication mode may be switched to the uplink communication mode. The communication parameters involved in the switching include signal wavelength, modulation mode, signal transmission power, receiving sensitivity and other parameters.

Embodiment VI: a first antenna of the intelligent device for transmitting and receiving signals in the first state is switched to a second antenna for transmitting and receiving signals in the second state.

For example, the first antenna may be used for signal transmission and reception in the flight shooting state, while the second antenna may be used for signal transmission and reception in the ground shooting state. Among them, the switching between the antennas is controlled by an antenna switching circuit on the intelligent device, *i.e.,* the processor on the intelligent device generates an antenna switching instruction and controls the antenna switching circuit to switch from the first antenna to the second antenna. It may be understood that the antenna switching circuit may be a relay or a triode, and the antenna switching circuit may be used to cut off the power supply to the first antenna and connect the second antenna with the power supply circuit, then indicating that the first antenna is disabled while the second antenna is enabled so as to complete the switching between the first antenna and the second antenna.

In addition, as an example, the intelligent device may implement the switching between shooting states, *i.e.,* the state switching conditions include shooting state switching conditions. Therefore, when the intelligent device meets the shooting state switching conditions, the intelligent device may be switched from a first shooting state to a second shooting state.

A shooting state may refer to states for different objects to be shot. For example, when the object to be shot is a person, resolution of pixels needs to be higher in the shooting state, and bokeh may be required for shooting; and when the object to be shot is a landscape, resolution of pixels may be set relatively lower in the shooting state, and bokeh is not required. Therefore, at the time of switching the shooting states, the corresponding shooting parameters may be switched to make them adaptive to shooting in different shooting states.

Certainly, the shooting states may also be distinguished according to the application scenario of the intelligent device. For example, the state parameters during the flight shooting and the ground shooting may also be different. For example, the indicator lamp may be turned ON during the flight shooting, and the indicator lamp may be controlled and turned off during the ground shooting; alternatively, the bandwidth of the image transmission module may be controlled to be lower during the flight shooting, and the bandwidth of the image transmission module may be controlled to be higher during the ground shooting.

As an example, one of the first shooting state and the second shooting state may be a self-propelled shooting state, and the other may be a handheld shooting state.

Among them, the self-propelled shooting state refers to a shooting state of the intelligent device at the time of shooting while self-propelling. The self-propelled shooting state includes at least one of a flight shooting state, a land navigation shooting state and an underwater navigation shooting state.

The handheld shooting state refers to a shooting state in which a user is shooting with a handheld intelligent device. In the handheld shooting state, a terminal device may be arranged on the bracket on the intelligent device. At this time, the intelligent device is a handheld DV. Due to the short-range communication between the terminal device and the intelligent device, the intelligent device transmits in real time captured images to the terminal device for display. At this time, the external device with a power system has been removed from the intelligent device, and the user may handhold the intelligent device for shooting. The external device with a power system includes at least one of a UAV arm, an underwater driving device and a vehicle driving device.

When the intelligent device is switched from the self-propelled shooting state to the handheld shooting state, the external device with a power system may be removed from the intelligent device, *i.e.,* it is determined that the intelligent device satisfies the shooting state switching conditions if change takes place in the connection state between the external device with a power system of the intelligent device and the body of the intelligent device.

Description will be made below by taking an example in which the self-propelled shooting state is the flight shooting state. At this time, the external device with a power system is an UAV arm.

The flight shooting state refers to a shooting state in which the intelligent device is shooting the ground from a high altitude. When the intelligent device is switched from the flight shooting state to the handheld shooting state, the UAV arm on the intelligent device may be removed, *i.e.,* it is determined that the intelligent device meets the shooting state switching conditions if change takes place in the connection state between the UAV arm of the intelligent device and the body of the intelligent device.

It may be understood that when the intelligent device detects that the UAV arm is disconnected from the body of the intelligent device, it may automatically switch the flight shooting state to the handheld shooting state, and the switching process may specifically involve the switching between such state parameters as are listed in the above embodiments, e.g., the switching between the bandwidths of the image transmission module, the switching between the transmit powers of the image transmission module, the switching between the brightness of the indicator lamp and/or the switching between the antennas. On the contrary, when the intelligent device detects the connection between the arm and the body of the intelligent device, it may automatically switch from the shooting state to the flight shooting state, and the switching process therein also involves the switching between the parameters in the above embodiments.

For example, the bandwidth of the image transmission module may be 5MHz/10MHz in the flight shooting state, and when the intelligent device is switched to the handheld shooting state, the bandwidth of the image transmission module may be adjusted to 20MHz to make the it reach the bandwidth required by the connection with a terminal device. On the contrary, at the time of switching from the handheld shooting state to the flight shooting state, the bandwidth of the image transmission module may be adjusted from 20MHz to 5MHz/10MHz, thereby increasing the image transmission distance and enhancing the anti-interference ability.

Alternatively, the transmit power of the image transmission module is a normal transmit power in the flight shooting state, and at the time of switching to the handheld shooting state, the transmit power of the image transmission module may be reduced to about 8dbm to achieve the short-range connection with a terminal device and reduce wireless radiation. On the contrary, at the time of switching from the handheld shooting state to the flight shooting state, the transmit power of the image transmission module may be switched from 8dbm to the normal transmit power to provide the long-distance performance of connecting a remote terminal device.

Alternatively, the first antenna is used for signal transmission and reception in the flight shooting state, and the second antenna is used for signal transmission and reception in the handheld shooting state, *i.e.,* the roundness of the radiation pattern of the first antenna is greater than that of the second antenna. Therefore, the roundness of the radiation pattern may be increased in the flight shooting state, and the greater the roundness, the smaller the signal change in all directions around the intelligent device. The first antenna may be arranged on the body of the intelligent device, and the second antenna may be arranged on the UAV arm of the intelligent device.

Alternatively, the brightness of the indicator lamp of the intelligent device is a first brightness in the flight shooting state, and the brightness of the indicator lamp is a second brightness in the handheld shooting state. Therefore, the brightness of the indicator lamp may also be adjusted from the first brightness to the second brightness at the time of switching from the flight shooting state to the handheld shooting state.

The brightness of the indicator lamp may be modulated by controlling the duty cycle of the output current to the indicator lamp by a LED driver on the intelligent device. If the first brightness is brighter than the second brightness, the duty cycle of the output current to the indicator lamp may be decreased, so that the brightness may be lowered. And in the handheld shooting state, the brightness will automatically reduce without dazzling. On the contrary, if the intelligent device is switched from the handheld shooting state to the flight shooting state, the duty cycle of the output current to the indicator may be increased.

In addition, if the handheld shooting state is different only in state parameters from the flight shooting state, the switching between the shooting state parameters may also be performed after a switching instruction is received. Among them, when it comes to the brightness of the indicator lamp, *i.e.,* after an instruction on switching the shooting state is received, the brightness of the indicator lamp may be switched from the first brightness in the first state to the second brightness in the second state.

It shall be noted that the above switching between the shooting states may also involve switching of other state parameters. What is described above is only exemplary, and the state parameters to be switched may be set to meet the actual needs. For example, when there are multiple cameras on the intelligent device, this may also involve the switching between cameras, between powers, and between circuits.

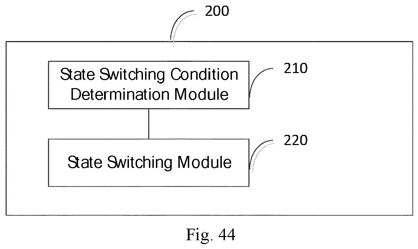

Referring to FIG. 44, a structural block diagram of a switching means 200 as is provided according one embodiment of the present application, in which the means 200 may be a module, a program segment or a code on the intelligent device. It should be understood that the means 200 corresponds to the method example of FIG. 41 above, capable of performing each step involved in the method example of FIG. 41. The specific functions of the means 200 may be found referring to the description above. For the avoidance of repetition, the detailed description will be omitted appropriately here.

Optionally, the means 200 comprises:
a state switching condition determination module 210 for determining whether the intelligent device satisfies a state switching condition;
a state switching module 220 for switching the intelligent device from a first state to a second state when the state switching condition is satisfied.

Optionally, the state switching conditions include shooting state switching conditions, and the state switching module 220 is used to switch the intelligent device from a first shooting state to a second shooting state when the shooting state switching condition is met, one of the first shooting state and the second shooting state being a flight shooting state, and the other being a handheld shooting state.

Optionally, the state switching condition determination module 210 is used to determine that the intelligent device satisfies the shooting state switching conditions if change takes place in the connection state between the arm of the intelligent device and the body of the intelligent device.

Optionally, the state switching module 220 is used to switch a first state parameter of the intelligent device in the first state to a second state parameter of the intelligent device in the second state.

Optionally, the state switching module 220 is used to switch a first bandwidth of an image transmission module of the intelligent device in the first state to a second bandwidth in the second state.

Optionally, the state switching module 220 is used to switch a first transmit power of the image transmission module of the intelligent device in the first state to a second transmit power in the second state.

Optionally, the state switching module 220 is used to switch a first brightness of an indicator lamp on the intelligent device in the first state to a second brightness in the second state.

Optionally, the state switching module 220 is used to switch a first antenna of the intelligent device for transmitting and receiving signals in the first state to a second antenna for transmitting and receiving signals in the second state.

One embodiment of the present application provides a readable storage medium executing the method or process as executed by the intelligent device in the method example as shown in FIG. 41 when the computer program is executed by the processor.

This example discloses a computer program product comprising a computer program stored on a non-transient computer-readable storage medium. The computer program includes a program instruction. When the program instruction is executed by the computer, the computer may execute the methods as provided by the above method examples, for example, comprising: determining whether the intelligent device meets the state switching conditions; and switching the intelligent device from the first state to the second state when the state switching conditions are met.

The aforesaid examples are only those specific modes of implementation of the present disclosure to illustrate the technical solutions of the present disclosure, instead of imposing limitations on the same, and the protection scope of the present disclosure is not limited to this. Notwithstanding the detailed description of the present disclosure made referring to the foregoing examples, a person skilled in the art should understand that within the technical scope disclosed by the present disclosure, any technician familiar with the technical field may still make modification or change as is easily envisaged to the technical solutions recited in the foregoing examples, or perform equivalent replacement for some of the technical features therein. These modifications, changes or replacements do not separate the essence of the corresponding technical solutions from the spirit and scope of the technical solutions of the examples of the present disclosure, and should be covered within the protection scope of the present disclosure. Hence, the protection scope of the present disclosure shall be subject to the protection scope of the claims.

## Claims

1. An intelligent device, **characterized in that** the intelligent device comprises:
a body comprising:
a first interface connected with an external device;
a controller connected with the first interface; and
wherein device modes of the intelligent device include a handheld device mode and a self-propelled device mode depending on the first interface and the external device; and
when the intelligent device is in the self-propelled device mode, the controller is configured to control the external device.

2. The intelligent device according to claim 1, **characterized in that** the self-propelled device mode includes at least one of an unmanned ground vehicle (UGV), an unmanned aerial vehicle (UAV), an unmanned ship and an unmanned submarine.

3. The intelligent device according to claim 1, **characterized in that** the body further comprises an image module configured to acquire images and/or videos.

4. The intelligent device according to claim 3, **characterized in that** the handheld device mode includes at least one of a camera and a digital video camera.

5. The intelligent device according to claim 3, **characterized in that** the body further comprises a gimbal, via which the image module is arranged in the body, and which is configured to rotate the image module.

6. The intelligent device according to claim 1, **characterized in that** the body further comprises a first motor driving circuit.

7. The intelligent device according to claim 6, **characterized in that** the external device comprises a device equipped with a power system, and the first motor driving circuit is configured to drive the device equipped with a power system to operate.

8. The intelligent device according to claim 7, **characterized in that** the device equipped with a power system comprises:
a power system for providing power; and
the power system comprising a motor.

9. The intelligent device according to claim 1, **characterized in that** the body further comprises a positioning device configured to determine position information of the intelligent device.

10. The intelligent device according to claim 9, **characterized in that** the positioning device includes at least one of a vision sensor, a satellite positioning device, a TOF, a barometer and an ultrasonic sensor.

11. The intelligent device according to claim 1, **characterized in that** the body further comprises a communication module configured for communication connection between the intelligent device with the external device.

12. The intelligent device according to claim 1, **characterized in that** the body further comprises a first power source for supplying power to the intelligent device

13. The intelligent device according to claim 1, **characterized in that** the first interface includes at least one of a wired interface, a wireless interface, a structural connection port, a communication interface, and a power supply interface.

14. The intelligent device according to claim 13, **characterized in that** the structural connection port is configured to allow a connection and/or quick release between the body and the external device.

15. The intelligent device according to claim 14, **characterized in that** the structural connection port comprises a swallowtail-shaped connection port.

16. The intelligent device according to claim 13, **characterized in that** the wireless interface includes at least one of Bluetooth and WiFi.

17. The intelligent device according to claim 13, **characterized in that** the external device comprises an electronic connection component, and the body further establishes connection with the external device via the wired interface and/or the wireless interface when a distance value between the body and the external device is less than a predefined threshold.

18. The intelligent device according to claim 17, **characterized in that** the external device comprises a human-computer interaction device establishing connection with the body manually and/or automatically.

19. The intelligent device according to claim 13, **characterized in that** the communication interface includes at least one of an antenna interface, USB, UART, CAN, I2C, SPI, PWM and I/O.

20. The intelligent device according to claim 19, **characterized in that** the antenna interface is used for connecting the body with an external antenna.

21. The intelligent device according to claim 13, **characterized in that** the power supply interface is used for supplying power to the external device.

22. The intelligent device according to claim 1, **characterized in that** the external device includes at least one of a structural connection component, an electronic connection component and a device equipped with a power system.

23. The intelligent device according to claim 1, **characterized in that** the external device further comprises a second interface, via which the external device further establishes connection with the first interface.

24. The intelligent device according to claim 1, **characterized in that** the external device further comprises a second power source for supplying power to the external device and/or the intelligent device.

25. The intelligent device according to claim 22, **characterized in that** the device equipped with a power system comprises:
a power system for providing power to the intelligent device; and
the power system comprising a motor.

26. The intelligent device according to claim 25, **characterized in that** the power system further comprises a second motor driving circuit configured to drive the motor to operate.

27. The intelligent device according to claim 1, **characterized in that** the external device includes at least one of a bracket, a wristband, a UAV arm, an external communication device, a mobile phone, a vehicle driving device, and an underwater driving device.

28. The intelligent device according to claim 27, **characterized in that** the bracket comprises a handheld bracket or a fixed bracket.

29. The intelligent device according to claim 27, **characterized in that** the UAV arm comprises a motor and a propeller.

30. The intelligent device according to claim 1, **characterized in that** the external device includes at least one of the bracket and the wristband when the intelligent device is in the handheld device mode.

31. The intelligent device according to claim 1, **characterized in that** the external device includes at least one of the UAV arm, the underwater driving device and the vehicle driving device when the intelligent device is in the self-propelled device mode.

32. The intelligent device according to claim 27 or 31, **characterized in that** the UAV arm comprises:
a first arm connected with the first interface;
a second arm hinged with the first arm via a damping component, so as to enable the second arm to rotate towards the first arm by overcoming a damping force of the damping component when the second arm is in an unfolded state relative to the first arm.

33. The intelligent device according to claim 32, **characterized in that** the damping component comprises a damping shaft, on which the second arm is sleeved.

34. The intelligent device according to claim 32, **characterized in that** a UAV unipod is provided on the first arm and the second arm.

35. The intelligent device according to claim 34, **characterized in that** the UAV unipod is capable of rotating relative to the UAV arm to unfold and/or fold.

36. The intelligent device according to claim 32, **characterized in that** the first arm and the second arm are provided at one end thereof with a motor in fixed connection thereto, and the motor is connected with a propeller.

37. The intelligent device according to claim 27 or 31, **characterized in that** the vehicle driving device comprises:
a motor; and
at least one of a tire and a caterpillar track.

38. The intelligent device according to claim 27 or 31, **characterized in that** the underwater driving device comprises a motor and a propeller.

39. An intelligent device, **characterized in that** the intelligent device comprises:
a body comprising a first structural connection port and a master connection contact, the first master connection contact being arranged on the first structural connection port;
an external device comprising a slave connection contact; and
wherein the body may be connected with and/or quickly released from the external device via the first structural connection port;
the master connection contact is electrically connected with the slave connection contact when the body is in connection with the external device.

40. The intelligent device according to claim 39, **characterized in that** the body further comprises a controller electrically connected with the master connection contact and configured to control the external device.

41. The intelligent device according to claim 39, **characterized in that** the master connection contact is embedded in the first structural connection port.

42. The intelligent device according to claim 39, **characterized in that** the first structural connection port is a swallowtail slot.

43. The intelligent device according to claim 40, **characterized in that** the external device further comprises a power system receiving, via the slave connection contact, a control instruction sent by the controller.

44. The intelligent device according to claim 40, **characterized in that** the body further comprises a communication module connected with the controller.

45. The intelligent device according to claim 39, **characterized in that** the external device includes at least one of a structural connection component, an electronic connection component and a device equipped with a power system.

46. The intelligent device according to claim 45, **characterized in that** the device equipped with the power system includes at least one of a UAV arm, an underwater driving device and a vehicle driving device.

47. The intelligent device according to claim 39, **characterized in that** the external device further comprises a second structural connection port corresponding to the first structural connection port, the slave connection contact being embedded in the second structural connection port.

48. The intelligent device according to claim 39, **characterized in that** when the intelligent device is a UAV, then the body is a UAV fuselage, and the external device is a UAV arm.

49. The intelligent device according to claim 39, **characterized in that** when the intelligent device is an unmanned ship and/or an unmanned submarine, then the body is at least one of an unmanned ship hull, an unmanned submarine hull and a UAV fuselage, and the external device is a driving device of the unmanned ship and/or a driving device of the unmanned submarine.

50. The intelligent device according to claim 39, **characterized in that** when the intelligent device is a UGV, then the body is at least one of a UGV bodywork and a UAV fuselage, and the external device is a vehicle driving device.

51. An intelligent device, **characterized in** comprising a body, a UAV arm and a bracket, the body comprising a first interface for alternatively connecting the UAV arm or the bracket.

52. The intelligent device according to claim 51, **characterized in that** the UAV arm comprises a first arm having one end for connecting the first interface and another end provided with a first motor connected with a propeller; and a second arm having one end connected with the first arm and another end provided with a second motor connected with a propeller.

53. The intelligent device according to claim 51, **characterized in that** the intelligent device further comprises an electronic connection component in quick-release connection to the bracket.

54. The intelligent device according to claim 53, **characterized in that** wireless connection is established between the body and the electronic connection component.

55. The intelligent device according to claim 53, **characterized in that** wired connection is established between the body and the electronic connection component.

56. The intelligent device according to claim 51, **characterized in that** the intelligent device comprises two UAV arms, the body comprises two first interfaces, and the intelligent device further comprises a wristband,
wherein one of the two first interfaces is used for alternatively connecting the UAV arm or the bracket, and the other is used for alternatively connecting the UAV arm or the wristband.

57. A switching method, **characterized in** being applied to an intelligent device, the switching method comprising:
determining whether the intelligent device satisfies a state switching condition; and
switching the intelligent device from a first state to a second state when the state switching condition is satisfied.

58. The switching method according to claim 57, **characterized in that** the state switching condition includes a shooting state switching condition, the step of switching the intelligent device from the first state to the second state when the state switching condition is satisfied comprises:
switching the intelligent device from a first shooting state to a second shooting state when the shooting state switching condition is satisfied.

59. The switching method according to claim 58, **characterized in that** one shooting state of the first shooting state and the second shooting state is a self-propelled shooting state, and the other is a handheld shooting state.

60. The switching method according to claim 59, **characterized in that** the intelligent device comprises a body and an external device equipped with a power system:
the step of determining whether the intelligent device satisfies the shooting state switching condition comprises:
determining that the intelligent device satisfies the shooting state switching condition if change takes place in the connection state between the device equipped with the power system and the body.

61. The switching method according to claim 57, **characterized in that** the step of switching the intelligent device from the first state to the second state comprises:
switching from a first state parameter of the intelligent device in the first state to a second state parameter of the intelligent device in the second state.

62. The switching method according to claim 61, **characterized in that** the step of switching from the first state parameter of the intelligent device in the first state to the second state parameter of the intelligent device in the second state comprises:
switching from a first bandwidth of an image transmission module of the intelligent device in the first state to a second bandwidth in the second state.

63. The switching method according to claim 61, **characterized in that** the step of switching from the first state parameter of the intelligent device in the first state to the second state parameter of the intelligent device in the second state comprises:
switching from a first transmit power of an image transmission module of the intelligent device in the first state to a second transmit power in the second state.

64. The switching method according to claim 61, **characterized in that** the step of switching from the first state parameter of the intelligent device in the first state to the second state parameter of the intelligent device in the second state comprises:
switching from a first brightness of an indicator lamp of the intelligent device in the first state to a second brightness in the second state.

65. The switching method according to claim 57, **characterized in that** the step of switching the intelligent device from the first state to the second state comprises:
switching from a first antenna of the intelligent device for receiving and transmitting signals in the first state to a second antenna for receiving and transmitting signals in the second state.
